# EUROPEAN PATENT SPECIFICATION

(11) **EP 2 977 632 B1**
(45) Date of publication and mention of the grant of the patent: **16.05.2018**
(21) Application number: 14768604.2
(22) Date of filing: 17.03.2014
(51) Int. Cl.: F16D 9/00, F16D 7/02, F16D 43/21

(54) **POWER TRANSMISSION DEVICE**
STROMÜBERTRAGUNGSVORRICHTUNG
DISPOSITIF DE TRANSMISSION D'ÉNERGIE

(30) Priority: 21.03.2013 JP 2013057672
(43) Date of publication of application: 27.01.2016
(73) Proprietor: Ogura Clutch Co., Ltd., Kiryu-shi, Gunma 376-0011 (JP)
(72) Inventor: KATO,Motoi, Kiryu-shi Gunma 376-0011 (JP); KUROSU,Yoshihiro, Kiryu-shi Gunma 376-0011 (JP); KANZAWA,Takahiro, Kiryu-shi Gunma 376-0011 (JP)
(74) Representative: Zenz Patentanwälte Partnerschaft mbB
(86) International application number: PCT/JP2014/057070
(87) International publication number: WO 2014/148414

(56) References cited:
- EP-A1- 1 413 751
- WO-A1-2008/044590
- JP-A- 2007 100 893
- JP-A- 2008 008 359
- JP-A- 2008 151 166
- JP-A- 2008 190 695

## Description

### Technical Field

The present invention relates to a power transmission device according to the preamble of claim 1. Accordingly, the invention relates to a power transmission device capable of transmitting power to a compressor for a car air conditioner, and cutting off power transmission by a torque limiter when an overload is generated on the compressor side.

### Background Art

A power transmission device of the above-mentioned type is known, e.g. from EP 1 413 751 A1 or WO2008/044590 A1. Further, a conventional power transmission device of this type is, for example, one described in patent literature 1. The power transmission device disclosed in patent literature 1 includes a pulley serving as a driving-side rotation member to which the power of a motorcar engine is transmitted via a belt, and a hub serving as a driven-side rotation member connected to the disc portion of the pulley via a plurality of connecting members. The pulley is supported by the housing of a compressor via a bearing so that the pulley can freely rotate. The hub is mounted at the distal end of the rotation shaft of the compressor, and rotates together with the rotation shaft.

Each connecting member is formed from a plate formed into a band shape. One end portion of the connecting member is connected to the pulley. The other end portion of the connecting member is connected to the hub. The connecting structure of the connecting portion between the connecting member and the pulley is a structure in which, when an overload is generated on the compressor side, the connecting member comes off the pulley. This connecting structure is constituted by a notch formed at one end portion of the connecting member, and a rivet threaded in the notch.

The notch is formed into a shape that is open ahead in the rotation direction of the pulley. In addition, the notch is formed into a fan shape in which the opening width gradually increases toward the open side.

The rivet includes a columnar portion that can be threaded into the notch, and a head portion provided at one end of the columnar portion. The rivet is calked and fixed to the disc portion in a state in which the columnar portion extends through the connecting member and the disc portion of the pulley and the head presses the connecting member against the disc portion of the pulley. That is, the rivet is fixed to the disc portion in a state in which one end portion of the connecting member is sandwiched between the disc portion of the pulley and the head portion of the rivet and these members are pressed.

The power transmission device described in patent literature 1 has a fitting structure in addition to the above-mentioned connecting structure, in order to increase a force for connecting one end portion of the connecting member to the pulley. This fitting structure includes a structure in which the head portion of the rivet and the connecting member are fitted in each other, and a structure in which the the connecting member and the disc portion are fitted in each other.

The connecting structure that connects the connecting member and the hub is a structure that prevents the connecting member from coming off the hub. The connection structure is configured so that, when one end portion of the connecting member comes off the pulley, the connecting member can pivot about the connecting portion with respect to the hub.

In the conventional power transmission device having this structure, the power of a motorcar engine is transmitted from the pulley to the hub via the connecting members, and the rotation shaft of the compressor rotates together with the hub. If an overload is generated on the rotation shaft of the compressor in the state in which the power is transmitted, the columnar portion of the rivet is separated from the notch of the connecting member to cut off the power transmission.

In the above-described conventional power transmission device, the power cutoff characteristic is determined by the following two forces. The first force is a force by which the rivet sandwiches the disc portion of the pulley and the connecting member from two sides and fixes them. The second force is the holding force of the notch that is generated when the columnar portion of the rivet expands in the radial direction by calking. In the conventional power transmission device, a force as a combination of the first and second forces serves as the operation load of the torque limiter.

### Related Art Literature

### Patent Literature

Patent Literature 1: Japanese Patent No. 5053614

### Disclosure of Invention

### Problem to be Solved by the Invention

The power transmission device described in patent literature 1 has a problem that it is difficult to set the magnitude of the load on the compressor side with high accuracy when power transmission is cut off, in other words, the operation load of the torque limiter that cuts off power transmission. This is because the operation load greatly depends on the fastening force of the rivet.

More specifically, the heights (lengths) of the rivets vary, so the first force differs between power transmission devices. Also, the expansion amount of the columnar portion in the radial direction readily changes for each rivet, so even the second force readily differs between power transmission devices.

In this manner, the conventional power transmission device has poor reliability of the characteristic of cutting off power because the operation load of the torque limiter greatly depends on the fastening force of the rivet.

The connecting member used in this power transmission device pivots about the connecting portion of the other end portion when the torque limiter operates and the columnar portion of the rivet comes off the slit at one end portion. Thus, one end portion of the connecting member separated from the pulley may collide with the boss portion of the hub or the like, and be deformed and broken.

The conventional power transmission device is requested to increase the operation load of the torque limiter. To meet this request, it is considered to increase the area of one end portion of the connecting member and the area of the rivet head portion in contact with this end portion, and increase the frictional resistance between the connecting member and the pulley and rivet.

However, if this arrangement is adopted, the gap between the connecting member and its peripheral member becomes narrow, and the aforementioned deformation or breakage is highly likely to occur. Note that such a trouble can be solved to a certain degree by ensuring a large diameter of the power transmission device and increasing the above-described gap. However, upsizing of the power transmission device needs to be avoided.

The present invention has been made to solve the above problems, and has as its object to provide a power transmission device capable of setting with high accuracy the operation load of a torque limiter that cuts off power transmission, and increasing the operation load of the torque limiter while achieving downsizing.

### Means of Solution to the Problem

To achieve this object, according to the present invention, there is provided a power transmission device having the features of claim 1. Further embodiments of the invention are described in the dependent claims. According to the present invention, the power transmission device comprising a first rotation body and a second rotation body that are arranged on the same rotation axis, a connecting member that connects the first rotation body and the second rotation body, a first connecting structure that connects one end portion of the connecting member to the first rotation body and regulates detachment of the connecting member from the first rotation body, and a second connecting structure that connects the other end portion of the connecting member to the second rotation body and permits detachment of the connecting member from the second rotation body, wherein the second connecting structure includes a columnar body that is provided on the second rotation body, the columnar body extending along the rotation axis through the other end portion, a projecting body formed along the other end portion from an end portion of the columnar body that is closer to the other end portion, a slit in which the columnar body is inserted, formed from an edge of the other end portion along a rotation locus of the columnar body, and an elastic body configured to press the other end portion in a direction of the axis, and generate a frictional force for transmitting power between a rotation member including the columnar body and the second rotation body, and the other end portion, the other end portion of the connecting member is formed to be larger than a remaining portion of the connecting member when viewed from the direction of the axis, and a recessed portion that is recessed toward an outer peripheral side of the second rotation body is formed at a portion of the other end portion that is directed to a shaft center side of the second rotation body.

### Effect of the Invention

In the power transmission device according to the present invention, the magnitude of power transmitted by a connecting member corresponds to the magnitude of a frictional resistance generated between the connecting member, and the rotation member including the columnar body and the second rotation body. When an overload is generated on a driven-side device to which the power transmission device according to the present invention transmits power, and the power transmission device changes to a state in which the connecting member transmits excessively large power, the power exceeds the frictional resistance.

In this case, the other end portion of the connecting member moves against the frictional resistance with respect to the rotation member including the columnar body and the second rotation body. Then, the columnar body inserted in the slit of the connecting member comes out of the slit. As a result, when the load becomes excessively large, as described above, the second connecting structure substantially functions as the torque limiter to cut off the transmission of power.

As described above, the magnitude of the load (operation load of the torque limiter) when the transmission of power is cut off is determined based on the magnitude of a frictional resistance between the other end portion of the connecting member, and a member that contacts the other end portion. The other end portion of the connecting member is formed to be larger than the remaining portion of the connecting member when viewed from the axial direction. Thus, the frictional resistance when the connecting member moves with respect to the second rotation body increases. Along with this, the operation load of the torque limiter increases.

The magnitude of the above-mentioned frictional resistance becomes a magnitude corresponding to the magnitude of the spring force of the elastic body. The magnitude of the spring force of the elastic body becomes almost equal to a design value without greatly depending on the attaching structure of the columnar body. As a result, the power transmission device according to the present invention implements a large operation load of the torque limiter and high accuracy of the operation load.

When the other end portion of the connecting member moves against the frictional resistance with respect to the second rotation body before cutting off power transmission, it comes close to a member positioned on the shaft center side of the second rotation body. This is because one end portion out of one end portion and the other end portion of the connecting member rotates together with the driving-side rotation body. When the other end portion of the connecting member comes close to the shaft center-side member in this fashion, part of the shaft center-side member enters the recessed portion of the other end portion. This can prevent collision of the connecting member with the shaft center-side member though the other end portion of the connecting member is formed to be large.

The power transmission device need not be formed to be large in the radial direction in order to avoid the interference between the other end portion of the connecting member and the above-mentioned shaft center-side member. Therefore, the power transmission device can be downsized though the arrangement that increases the operation load of the torque limiter is adopted.

Hence, the present invention can provide a power transmission device capable of setting with high accuracy the operation load of the torque limiter that cuts off power transmission, and setting a large operation load of the torque limiter while achieving downsizing.

### Brief Description of Drawings

Fig. 1 is a front view of a power transmission device according to the first embodiment, and Fig. 1 shows a state in which a columnar body and a hub are partially cut away;
Fig. 2 is a sectional view of the power transmission device according to the first embodiment, and Fig. 2 is a sectional view taken along a line II - II in Fig. 1;
Fig. 3A is an enlarged sectional view showing the second connecting structure according to the first embodiment;
Fig. 3B is an enlarged front view showing the second connecting structure according to the first embodiment;
Fig. 3C is an enlarged sectional view showing the second connecting structure in which the installation direction of a belleville spring is different;
Fig. 3D is an enlarged sectional view showing the second connecting structure having a projecting body smaller than the belleville spring;
Fig. 3E is an enlarged sectional view showing the second connecting structure having a washer;
Fig. 4 is a front view showing a state in which the power transmission of the power transmission device is cut off according to the first embodiment;
Fig. 5 is a sectional view showing the state in which the power transmission of the power transmission device is cut off according to the first embodiment;
Fig. 6 is a rear view of the hub and the connecting member when viewed from the compressor side according to the first embodiment;
Fig. 7 is a front view of the connecting member according to the first embodiment;
Fig. 8 is a front view of a power transmission device according to the second embodiment;
Fig. 9 is a sectional view of the power transmission device according to the second embodiment, and Fig. 9 is a sectional view taken along a line IX - IX in Fig. 8;
Fig. 10 is a front view of a hub and a connecting member according to the second embodiment;
Fig. 11 is a sectional view showing a state immediately after the connecting member of the power transmission device comes off the second rotation body according to the second embodiment;
Fig. 12 is a front view showing the state immediately after the connecting member of the power transmission device comes off the second rotation body according to the second embodiment;
Fig. 13 is a front view showing a state in which the connecting member abuts against a stopper according to the second embodiment;
Fig. 14 is a front view of a power transmission device in which the slit shape is different, and Fig. 14 shows a state in which a columnar body and a hub are partially cut away;
Fig. 15 is a sectional view of the power transmission device in which the slit shape is different, and Fig. 15 is a sectional view taken along a line XV - XV in Fig. 14;
Fig. 16 is an enlarged sectional view showing the main part of the power transmission device in which the slit shape is different;
Fig. 17 is a front view showing a state in which the power transmission of the power transmission device, in which the slit shape is different, is cut off;
Fig. 18 is a sectional view showing the second connecting structure according to the third embodiment;
Fig. 19 is a sectional view showing the second connecting structure according to the fourth embodiment;
Fig. 20 is a sectional view showing the second connecting structure according to the fifth embodiment;
Fig. 21 is a sectional view showing the second connecting structure according to the sixth embodiment; and
Fig. 22 is a front view of a power transmission device in which the position of the second connecting structure is different, and Fig. 22 shows a state in which a columnar body and a hub are partially cut away.

### Best Mode for Carrying Out the Invention

### (First Embodiment)

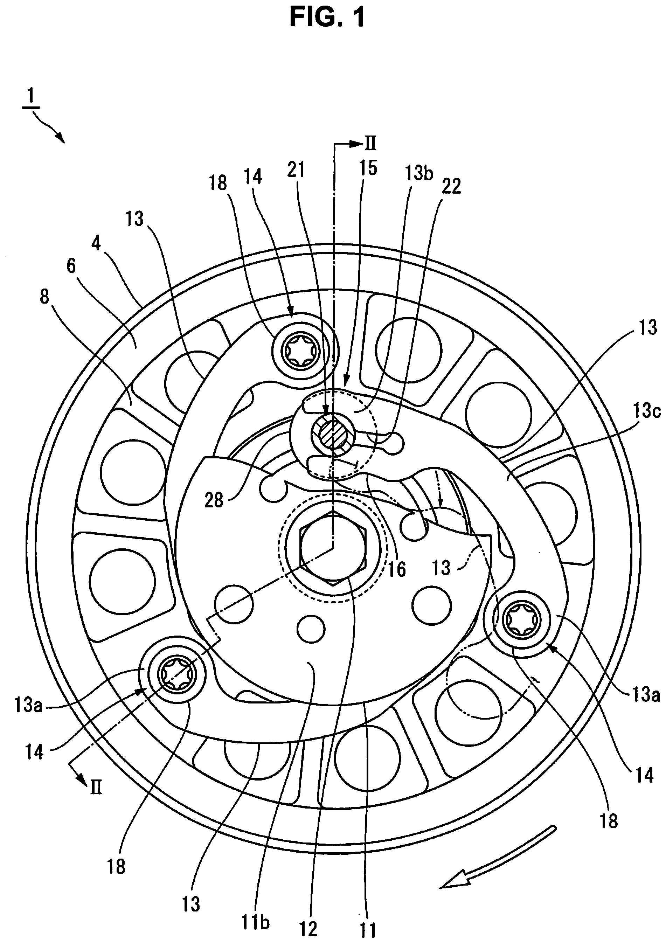

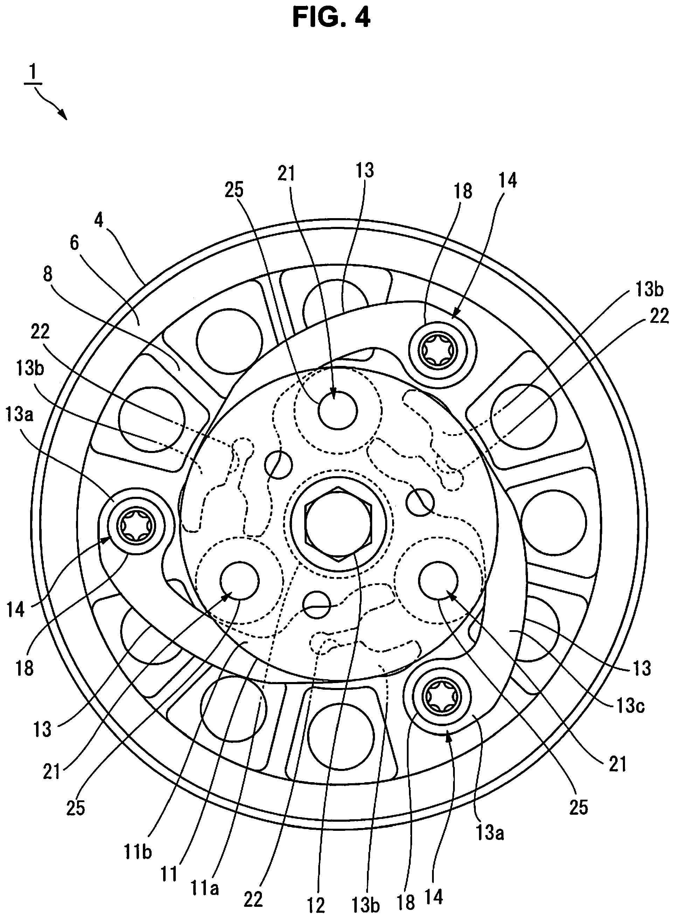

An embodiment of a power transmission device according to the present invention will be described in detail below with reference to Figs. 1 to 7. The power transmission device according to the first embodiment constitutes the inventions defined in claims 1, 2, 5, and 8.

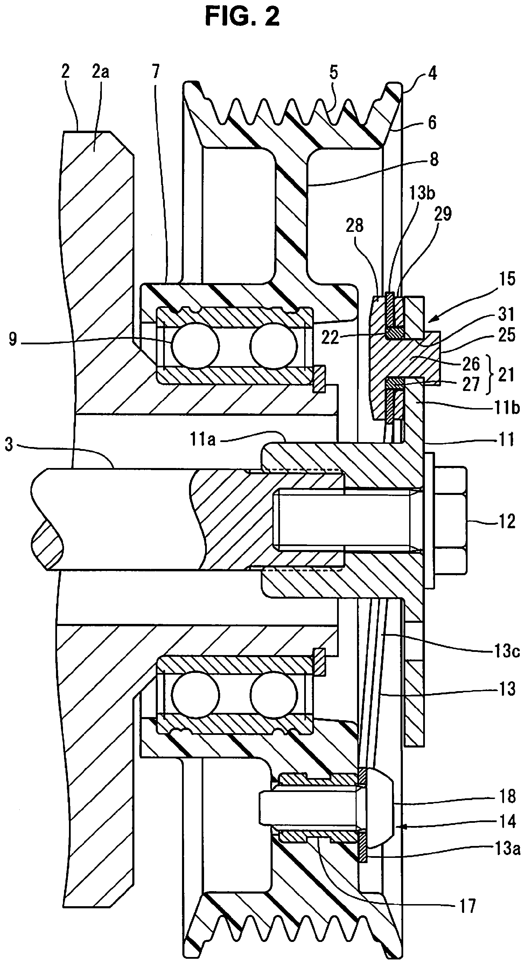

A power transmission device 1 shown in Fig. 1 has the following two functions. The first function is a function of transmitting the power of a motorcar engine (not shown) to a car air conditioner compressor 2 shown in Fig. 2. The second function is the function of a torque limiter that cuts off power transmission when an overload is generated on a rotation shaft 3 of the compressor 2. In this embodiment, the motorcar engine is equivalent to a "power source" in the present invention.

The power of the motorcar engine is transmitted to a pulley 4 of the power transmission device 1 via a belt (not shown).

As shown in Fig. 2, the pulley 4 is constituted by a belt latching portion 6 of a circular cylindrical shape having a groove 5 in which a belt is wound, an inner cylindrical portion 7 positioned on the inner side of the belt latching portion 6, and an intermediate portion 8 that connects these two portions. The belt latching portion 6, the inner cylindrical portion 7, and the intermediate portion 8 are integrally formed from a plastic material by integral molding. The inner cylindrical portion 7 is supported by a housing 2a of the compressor 2 via a bearing 9 so that the inner cylindrical portion 7 can freely rotate. The pulley 4 is positioned on the same axis as that of the rotation shaft 3. In this embodiment, the pulley 4 constitutes a "driving-side rotation body" in the present invention.

The rotation shaft 3 is equipped in the car air conditioner compressor 2 in a state in which one shaft end portion projects from one end portion of the housing 2a. In the following description, the direction in which the shaft end portion projects from the housing 2a is defined as the fore of the car air conditioner compressor 2, and a direction opposite to this direction is defined as the back.

A hub 11 is attached to the shaft end portion (fore end portion) of the rotation shaft 3. In this embodiment, the hub 11 constitutes a "driven-side rotation body" in the present invention.

The hub 11 is constituted by a boss portion 11a that is fixed to the rotation shaft 3, and a plate-like attaching flange portion 11b that extends outward from the boss portion 11a in the radial direction. The boss portion 11a is formed into a circular cylindrical shape, and the shaft end portion of the rotation shaft 3 is screwed in the boss portion 11a. The boss portion 11a is fixed to the rotation shaft 3 by a fixing bolt 12 extending through the shaft center portion. The rotation shaft 3 and the boss portion 11a thus rotate integrally.

As shown in Fig. 1, the flange portion 11b is formed into a circular shape when viewed from the axial direction of the rotation shaft 3. Three connecting members 13 (to be described later) are attached to the flange portion 11b. The connecting members 13 are attached at positions at which the flange portion 11b is trisected in the circumferential direction.

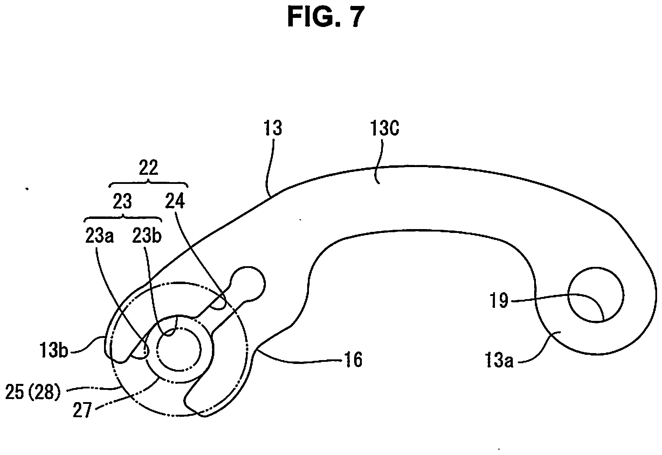

Each connecting member 13 transmits rotation of the pulley 4 to the hub 11. As shown in Fig. 7, the connecting member 13 is formed from a plate having an arc shape. Also, the connecting member 13 is formed from a spring material.

One end portion 13a of the connecting member 13 is connected to the intermediate portion 8 of the pulley 4 via a corresponding first connecting structure 14 (to be described later).

The other end portion 13b of the connecting member 13 is connected to the flange portion 11b of the hub 11 via a corresponding second connecting structure 15 (to be described later) on the back side from one end portion 13a in the rotation direction (clockwise in Fig. 1) of the pulley 4.

As shown in Fig. 7, the other end portion 13b is formed to be larger than the remaining portion of the connecting member 13 when viewed from the axial direction of the hub 11. A recessed portion 16 that is recessed toward the outer peripheral side of the hub 11 is formed at a portion of the other end portion 13b that is directed to the shaft center side of the hub 11. The recessed portion 16 has a shape in which part of the boss portion 11a of the hub 11 can be fitted, and is formed into an arc shape when viewed from the axial direction of the hub 11.

In this embodiment, one end portion 13a of the connecting member 13 is equivalent to "one end portion" in the present invention, and the other end portion 13b of the connecting member 13 is equivalent to the "other end portion" in the present invention. In this embodiment, the pulley 4 is equivalent to the "first rotation body" in the present invention, and the hub 11 is equivalent to the "second rotation body" in the present invention.

As shown in Fig. 7, a connecting portion 13c that connects one end portion 13a and the other end portion 13b of the connecting member 13 is formed into an arc shape when viewed from the axial direction of the hub 11. The width of the connecting portion 13c is formed to be smaller than those of one end portion 13a and the other end portion 13b.

As shown in Fig. 2, the flange portion 11b of the hub 11 is arranged at a position spaced apart from the inner cylindrical portion 7 and intermediate portion 8 of the pulley 4 toward the fore of the car air conditioner compressor 2. The connecting member 13 is attached to the pulley 4 and the hub 11 in a state in which the connecting member 13 is elastically deformed in the axial direction of the hub 11. The other end portion 13b of the connecting member 13 is arranged at a position in which it is shifted to the fore of the car air conditioner compressor 2 with respect to one end portion 13a. The connecting member 13 thus biases the shaft end portion of the rotation shaft 3 to the back (to the inside of the car air conditioner compressor 2) with respect to the housing 2a of the car air conditioner compressor 2. That is, the power transmission device according to this embodiment has a so-called shaft compression specification.

As shown in Fig. 1, the connecting portions between the pulley 4 and the connecting members 13, which are constituted by the first connecting structures 14, are disposed at three portions spaced apart from each other at equal intervals in the rotation direction of the pulley 4. Each first connecting structure 14 is a structure that regulates detachment of one end portion 13a of the connecting member 13 from the pulley 4. As shown in Fig. 2, the first connecting structure 14 according to this embodiment is constituted by a nut member 17 buried at the intermediate portion 8 of the pulley 4, and an attaching screw 18 that supports one end portion 13a of the connecting member 13 in cooperation with the nut member 17.

The attaching screw 18 is threaded in a through hole 19 (see Fig. 7) formed in one end portion 13a of the connecting member 13. The attaching screw 18 is threadably fixed to the nut member 17 in a state in which the connecting member 13 can pivot about the attaching screw 18.

The connecting member 13 extends backward in the rotation direction of the pulley 4 from a portion at which the connecting member 13 is fixed to the pulley 4 by the first connecting structure 14.

Each second connecting structure 15 implements the above-described torque limiter function. The second connecting structure 15 is a structure in which the connecting member 13 is connected to the hub 11 in a normal state in which no overload is generated in the compressor 2, and when an overload is generated in the compressor 2, the other end portion 13b of the connecting member 13 is permitted to come off the hub 11. As shown in Figs. 1 and 2, the second connecting structure 15 according to this embodiment includes a columnar body 21 provided on the hub 11, and a slit 22 of the connecting member 13 in which the columnar body 21 is inserted. The columnar body 21 is provided on the hub 11 in a state in which the columnar body 21 extends in the axial direction, details of which will be described later. The columnar body 21 extends through the connecting member 13 in the axial direction in the connecting state shown in Fig. 2.

As shown in Fig. 7, the slit 22 is formed into a shape crossing the other end portion 13b of the connecting member 13 in the longitudinal direction of the connecting member 13. The slit 22 according to this embodiment is constituted by a wide portion 23 that is open at the edge (edge positioned on a side opposite to one end portion 13a) of the other end portion 13b, and a narrow portion 24 that extends from the wide portion 23 toward one end portion 13a of the connecting member 13. The opening width of the wide portion 23 is a width with which the columnar body 21 having a circular section (to be described later) can be inserted, and is formed to be larger than the opening width of the narrow portion 24. The direction in which the slit 22 extends is a direction along the rotation locus of the columnar body 21 that rotates together with the hub 11.

The wide portion 23 is constituted by a columnar passage portion 23a that extends from the edge of the other end portion 13b along the above-mentioned rotation locus, and an arc portion 23b that is positioned on the fore side with respect to the columnar passage portion 23a in the rotation direction of the hub 11. The columnar passage portion 23a is formed into a shape in which a minimum clearance is formed between the columnar passage portion 23a and the columnar body 21, and a shape through which the columnar body 21 passes without elastically deforming the connecting member 13. As shown in Fig. 1, the arc portion 23b is formed into a shape in which almost half the outer circumferential portion of the columnar body 21 is fitted in the arc portion 23b. That is, the wide portion 23 is formed into a shape in which the columnar body 21 can be inserted from the distal end portion of the slit 22 to the intermediate portion.

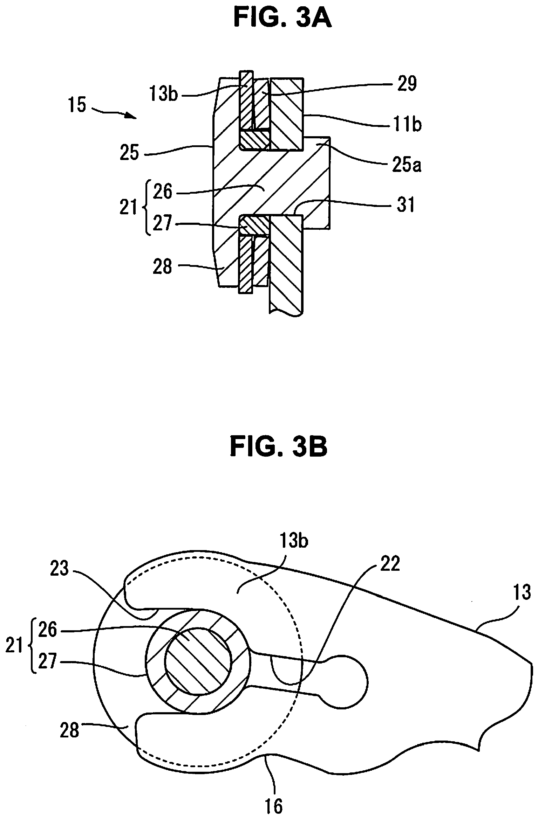

As shown in Fig. 3A, the columnar body 21 according to this embodiment is constituted by a plurality of members. The columnar body 21 is constituted by a shaft portion 26 of a rivet 25 that extends through the flange portion 11b of the hub 11 in the axial direction (right-and-left direction in Fig. 3A), and a circular cylindrical collar 27 through which the shaft portion 26 extends. The collar 27 is inserted in the wide portion 23 of the slit 22. The length of the collar 27 in the axial direction is formed to be larger than the thickness of the connecting member 13. That is, the columnar body 21 is provided at the flange portion 11b of the hub 11 in a state in which the columnar body 21 extends in the axial direction of the hub 11, and extends through the other end portion 13b of the connecting member 13 in the axial direction. The columnar body 21 projects from the other end portion 13b of the connecting member 13 on a side (back side of the car air conditioner compressor 2) opposite to the flange portion 11b.

The rivet 25 is constituted by the above-described shaft portion 26, and a head portion 28 that is integrally formed at the back end portion of the shaft portion 26 (projection-side end portion projecting backward from the flange portion 11b). The shaft portion 26 is formed into a rod shape having a circular section. The head portion 28 is formed into a disc shape projecting outward in the radial direction from the back end portion of the shaft portion 26 (an end portion of the shaft portion 26 that is close to the other end portion 13b of the connecting member 13). In this embodiment, the head portion 28 is equivalent to a "projecting body" in the present invention.

The other end portion 13b of the connecting member 13 is arranged on the fore with respect to the head portion 28 and at a position where the other end portion 13b is adjacent to the head portion 28. That is, the head portion 28 projects from the back end portion (projection-side end portion) of the columnar body 21 and faces the other end portion 13b of the connecting member 13. A belleville spring 29 is inserted between the other end portion 13b of the connecting member 13 and the flange portion 11b of the hub 11. The belleville spring 29 is formed into an annular shape, and is held by the rivet 25 via the collar 27 in a state in which the collar 27 extends through the center portion. The outer diameter of the belleville spring 29 is equal to that of the head portion 28 of the rivet 25. That is, the head portion 28 of the rivet 25 is formed to have a size at which the entire area of the belleville spring 29 overlaps the head portion 28 when viewed from the axial direction of the hub 11. The head portion 28 of the rivet 25 and the belleville spring 29 are formed to have a size at which they overlap the most part of the other end portion 13b of the connecting member 13. In this embodiment, the belleville spring 29 constitutes an "elastic body" in the present invention, and constitutes a "plate-like spring" in the invention defined in claim 5.

An end portion of the shaft portion 26 of the rivet 25 on a side opposite to the head portion 28 is fitted in a through hole 31 formed in the flange portion 11b of the hub 11, and projects from the flange portion 11b to the side opposite to the head portion 28. This projecting portion is plastically deformed by calking, thereby forming a calked portion 25a of the rivet 25.

Calking of the rivet 25 is performed in a state in which the head portion 28 presses the collar 27 against the flange portion 11b. That is, the collar 27 functions as even a member that sets the so-called calking height of the rivet 25.

The belleville spring 29 is formed into a shape that is elastically deformed in the axial direction in a state in which the rivet 25 is fixed to the flange portion 11b by calking. That is, the length of the collar 27 in the axial direction is formed to be a length at which a gap of a predetermined width is formed between the other end portion 13b of the connecting member 13 and the flange portion 11b of the hub 11, and the belleville spring 29 is elastically deformed by a predetermined deformation amount within this gap. As shown in Fig. 3A, the belleville spring 29 according to this embodiment is mounted between the other end portion 13b of the connecting member 13 and the flange portion 11b of the hub 11 in a state in which the outer peripheral portion contacts the other end portion 13b of the connecting member 13.

When the belleville spring 29 is sandwiched between the other end portion 13b and the flange portion 11b and elastically deformed, the spring force of the belleville spring 29 is transmitted to the connecting member 13, and the connecting member 13 is pressed against the head portion 28 by the spring force. Note that the "plate-like spring" in the present invention is not limited to the belleville spring 29 described in this embodiment. That is, a spring formed into a corrugated plate shape can be used as the "plate-like spring" in the present invention.

The elastically deformed belleville spring 29 presses the other end portion 13b of the connecting member 13 in the axial direction (back of the car air conditioner compressor 2) of the hub 11, and generates a frictional force for transmitting power between the rotation member including the columnar body 21 and the hub 11, and the other end portion 13b of the connecting member 13. That is, the second connecting structure 15 connects the connecting member 13 and the hub 11 by the frictional resistance.

The operation of the power transmission device 1 having the above-described arrangement will be explained.

In the power transmission device 1 according to this embodiment, the power of the motorcar engine is transmitted to the pulley 4 via the belt to rotate the pulley 4. When the pulley 4 rotates, the connecting members 13 pull the flange portion 11b of the hub 11 forward in the rotation direction to rotate the hub 11. As a result, the rotation shaft 3 having the hub 11 rotates to drive the compressor 2. This power transmission state is a state in which a frictional force generated in the second connecting structure 15 is larger than a tensile force (force corresponding to the load of the compressor 2) acting on the connecting member 13.

When an overload is generated in the compressor 2 and the above-described tensile force exceeds the frictional force, the other end portion 13b of each connecting member 13 slips from the head portion 28 of the rivet 25 and the belleville spring 29 against the frictional resistance, and moves as indicated by a chain double-dashed line in Fig. 1. The operation of slippage against the frictional resistance continues until the other end portion 13b exits from the gap between the head portion 28 and the belleville spring 29. In the course of this movement, the connecting member 13 swings about the shaft portion 26 of the rivet 25 in a direction in which the connecting portion 13c comes close to the boss portion 11a of the hub 11, as indicated by the chain double-dashed line in Fig. 1.

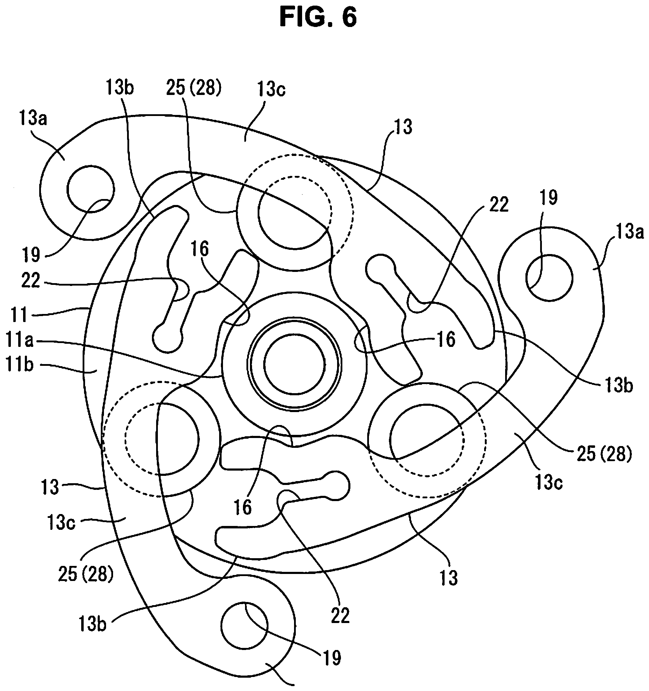

When the connecting member 13 swings in this way, the other end portion 13b comes close to the boss portion 11a of the hub 11 during movement against the frictional resistance. The recessed portion 16 is formed at a portion of the other end portion 13b that faces the boss portion 11a. When the other end portion 13b comes close to the boss portion 11a, part of the boss portion 11a is fitted in the recessed portion 16, as shown in Fig. 6. Since the boss portion 11a is fitted in the recessed portion 16, collision of the other end portion 13b with the boss portion 11a can be avoided.

When the other end portion 13b of the connecting member 13 exits from the gap between the head portion 28 and the belleville spring 29, the second connecting structure 15 is disconnected. As a result, when the load of the compressor 2 becomes excessively large, the second connecting structure 15 substantially functions as the torque limiter to cut off the transmission of power.

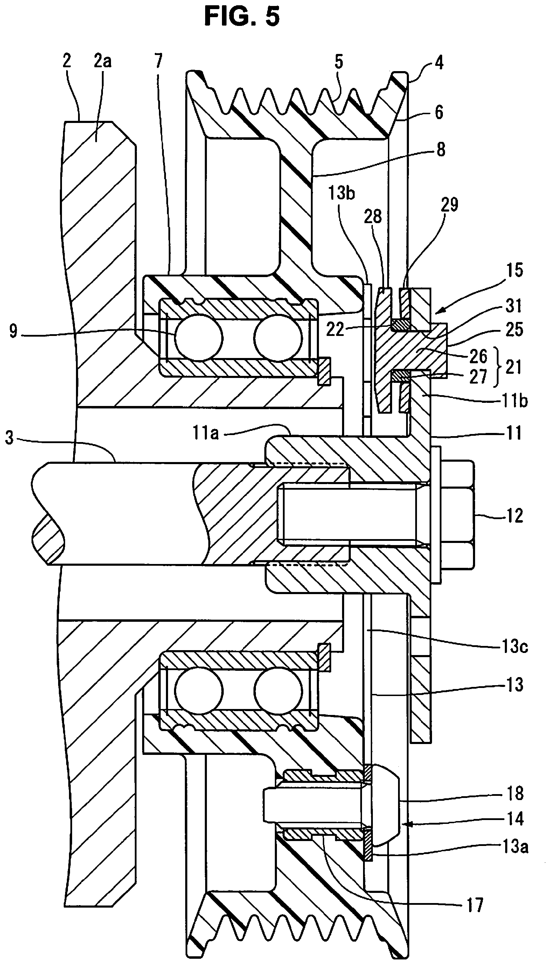

After the other end portion 13b is separated from the hub 11, the connecting member 13 is restored to the initial shape by elasticity and linearly extends in a direction perpendicular to the axial direction of the hub 11, as shown in Fig. 5. At this time, the other end portion 13b of the connecting member 13 moves to the gap between the rivet 25 and the inner cylindrical portion 7 of the pulley 4 in the axial direction of the hub 11. The connecting member 13 separated from the hub 11 swings about the attaching screw 18 of one end portion 13a by a centrifugal force generated by rotation integral with the pulley 4. The swing direction is a direction in which the other end portion 13b moves to the outer peripheral side of the pulley 4. This swing is regulated by abutment of the other end portion 13b of the connecting member 13 to the belt latching portion 6 of the pulley 4. Thus, even if the connecting member 13 is stretched by the centrifugal force, the belt is not damaged.

In the power transmission device 1 according to this embodiment, the magnitude of the load (operation load of the torque limiter) when the transmission of power is cut off is determined based on the magnitude of the frictional resistance between the other end portion 13b of the connecting member 13 and the member in contact with the other end portion 13b. The other end portion 13b of the connecting member 13 is formed to be larger than the remaining portion of the connecting member 13 when viewed from the axial direction, and most part of the other end portion 13b is sandwiched between the head portion 28 of the rivet 25 and the belleville spring 29. When the connecting member 13 moves with respect to the hub 11, a large frictional resistance is generated to increase the operation load of the torque limiter.

Also, the magnitude of the above-mentioned frictional resistance is a magnitude corresponding to the magnitude of the spring force of the belleville spring 29. The magnitude of the spring force of the belleville spring 29 is almost equal to a design value without depending on the attaching structure of the columnar body 21. Therefore, the power transmission device 1 according to this embodiment implements a large operation load of the torque limiter and high accuracy of the operation load.

When the other end portion 13b of the connecting member 13 according to this embodiment is separated from the hub 11, it comes close to the boss portion 11a of the hub 11. However, the recessed portion 16 is formed at the other end portion 13b, so even if the other end portion 13b moves toward the boss portion 11a of the hub 11, the connecting member 13 and the hub 11 do not interfere with each other. In other words, since the power transmission device 1 need not be formed to be large in the radial direction in order to avoid this interference, the power transmission device 1 can be downsized.

Therefore, this embodiment can provide a power transmission device capable of setting with high accuracy the operation load of a torque limiter that cuts off power transmission, and setting a large operation load while achieving downsizing.

The columnar body 21 according to this embodiment is constituted by the shaft portion 26 of the rivet 25 that extends through the hub 11 and the other end portion 13b of the connecting member 13, and the circular cylindrical collar through which the shaft portion 26 extends. The collar is formed to be longer than the thickness of the other end portion 13b of the connecting member 13. The collar is inserted in the slit 22 of the connecting member 13.

The projecting body according to this embodiment is constituted by the head portion 28 of the rivet 25. The elastic body according to this embodiment is constituted by the belleville spring 29 provided between the head portion 28 and the hub 11.

According to this embodiment, the collar 27 formed separately from the rivet 25 is inserted in the slit 22. The outer diameter of the collar 27 is constant regardless of calking of the rivet 25. Since the object (collar 27) inserted in the slit 22 is not expanded by calking and the outer diameter of the object is not increased, the frictional resistance when the columnar body 21 passes through the slit 22 becomes constant.

This embodiment can therefore provide a power transmission device capable of setting with higher accuracy the load of the compressor 2 when power transmission is cut off. Since the magnitude of the spring force of the belleville spring 29 is changed by changing the length of the collar 27 in the axial direction, the operation load of the torque limiter can be easily adjusted.

The elastic body according to this embodiment is constituted by the annular belleville spring 29 through which the columnar body 21 extends. The belleville spring 29 is provided between the other end portion 13b of the connecting member 13 and the hub 11 in a state in which the outer peripheral portion contacts the other end portion 13b. When the columnar body 21 and the other end portion 13b of the connecting member 13 relatively move, a large frictional force acts at the other end portion 13b of the connecting member 13. At this time, the opening width of the slit 22 may be increased by the elastic deformation of the connecting member 13.

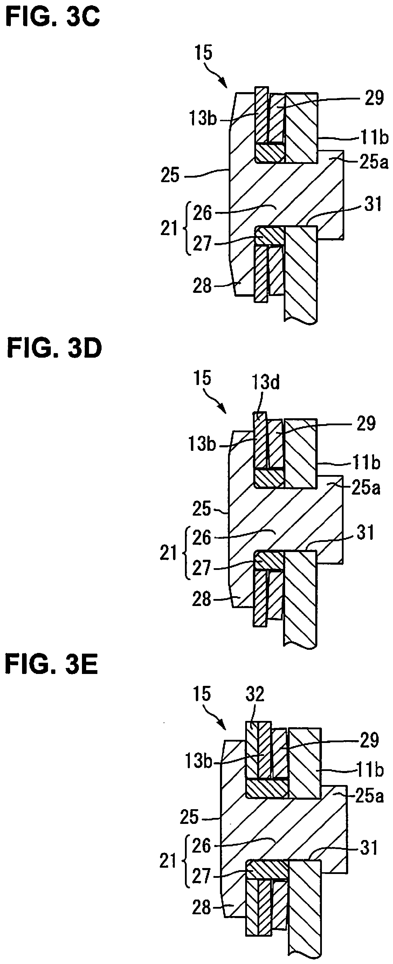

In this case, when the inner peripheral portion of the belleville spring 29 contacts the other end portion 13b of the connecting member 13, as shown in Fig. 3C, part of the inner peripheral edge of the belleville spring 29 may be fitted in the widened slit 22. This state is generated because, when microvibrations by the rotational fluctuation of the pulley 4 are transmitted to the connecting member 13, a large tensile force is instantaneously applied to the connecting member 13. In this state, the spring force of the belleville spring 29 is not stabilized, and the operation load of the torque limiter becomes unstable. This indicates that the transmission of power may be cut off though no overload is generated in the car air conditioner compressor 2. However, in this embodiment, the outer peripheral portion of the belleville spring 29 contacts the other end portion 13b of the connecting member 13, as shown in Fig. 3A, so the above-mentioned trouble is not generated and the operation load of the torque limiter becomes constant.

By employing the arrangement in which the outer peripheral portion of the belleville spring 29 contacts the connecting member 13, the outer edge portion of the other end portion 13b is pressed by the spring force of the belleville spring 29. When employing this arrangement, the diameter of the head portion 28 of the rivet 25 is desirably equal to the outer diameter of the belleville spring 29. This is because, if the diameter of the head portion 28 of the rivet 25 is smaller than the outer diameter of the belleville spring 29, an outer edge portion 13d of the other end portion 13b cannot be supported, as shown in Fig. 3D. That is, the outer edge portion 13d pressed by the spring force of the belleville spring 29 is elastically deformed, and part of the spring force of the belleville spring 29 does not act effectively.

As shown in Fig. 3B, the head portion 28 according to this embodiment is formed to have a size at which the entire area of the belleville spring 29 overlaps the head portion 28 when viewed from the axial direction of the hub 11, as shown in Fig. 3B, and all the spring force of the belleville spring 29 acts effectively. As a result, this embodiment can provide a power transmission device with high accuracy of the operation load of the torque limiter. To effectively use all the spring force of the belleville spring 29, an arrangement shown in Fig. 3E can be adopted. The diameter of the head portion 28 of the rivet 25 shown in Fig. 3E is formed to be smaller than the outer diameter of the belleville spring 29. However, a washer 32 is inserted between the head portion 28 and the other end portion 13b of the connecting member 13. The washer 32 is formed into an annular shape of a size at which the washer 32 overlaps the belleville spring 29 when viewed from the axial direction of the hub 11.

The connecting portion 13c of the connecting member 13 according to this embodiment is formed to be narrower than one end portion 13a and the other end portion 13b of the connecting member 13. The thus-formed connecting portion 13c is easily elastically deformed. According to this embodiment, work of elastically deforming the connecting member 13 and attaching it to the pulley 4 and the hub 11 can be easily performed.

### (Second Embodiment)

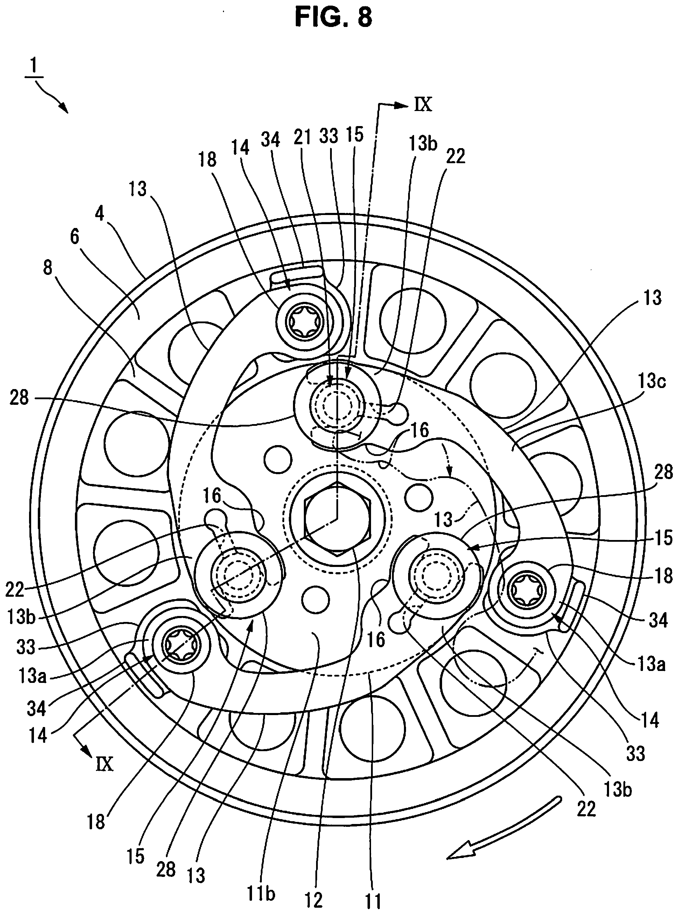

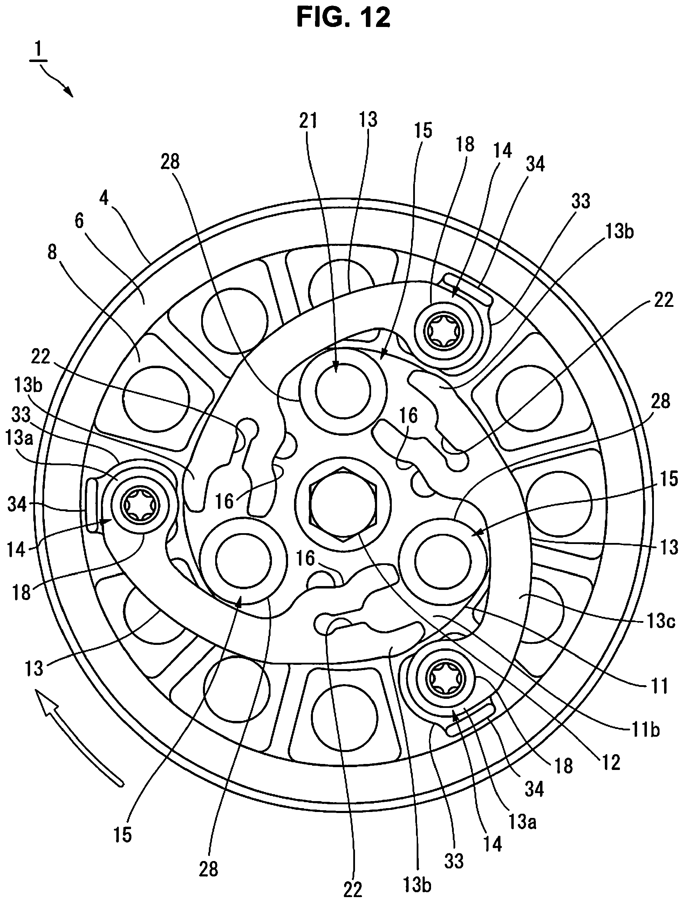

A power transmission device according to the present invention can also be constituted as shown in Figs. 8 to 13. In these drawings, the same reference numerals as those in Figs. 1 to 7 denote the same or similar parts, and a detailed description thereof will be properly omitted. A power transmission device 1 according to this embodiment constitutes the inventions defined in claims 3 to 5.

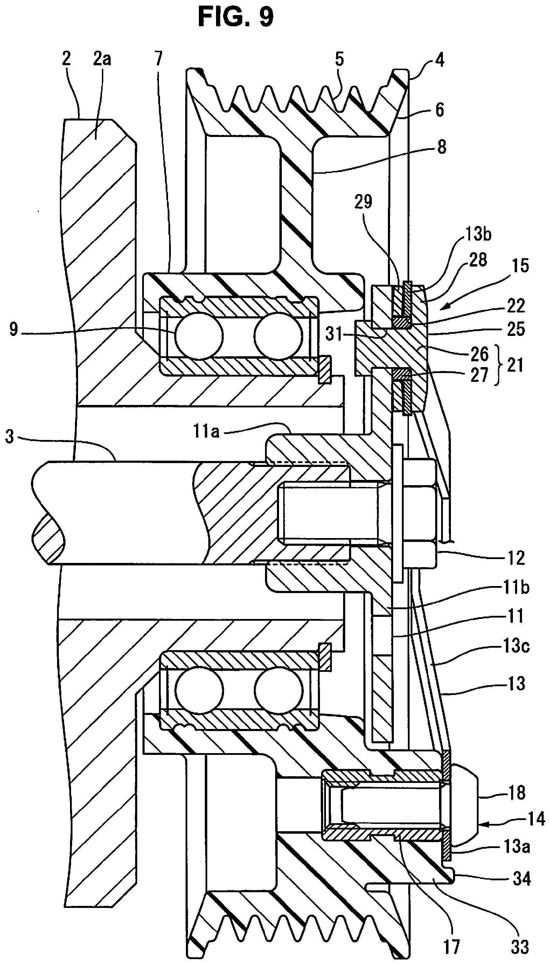

The power transmission device 1 according to this embodiment adopts an arrangement based on a so-called shaft tensile specification. A connecting member 13 of the power transmission device 1 is positioned on the fore with respect to a hub 11 in the axial direction of the hub 11, as shown in Figs. 8 and 9.

One end portion 13a of the connecting member 13 is attached by a first connecting structure 14 to an attaching seat 33 that is provided and projects at the intermediate portion of a pulley 4, so that one end portion 13a can pivot. The other end portion 13b of the connecting member 13 is attached to a flange portion 11b of the hub 11 by a second connecting structure 15. The attaching seat 33 of the pulley 4 projects forward from an intermediate portion 8 of the pulley 4. A portion that is the fore end of the attaching seat 33 and overlaps one end portion 13a of the connecting member 13 is positioned on the fore with respect to a fixing bolt 12 that fixes the hub 11 to a rotation shaft 3, in the axial direction of the hub 11. Hence, the connecting member 13 according to this embodiment biases the rotation shaft 3 forward with respect to a housing 2a of a car air conditioner compressor 2.

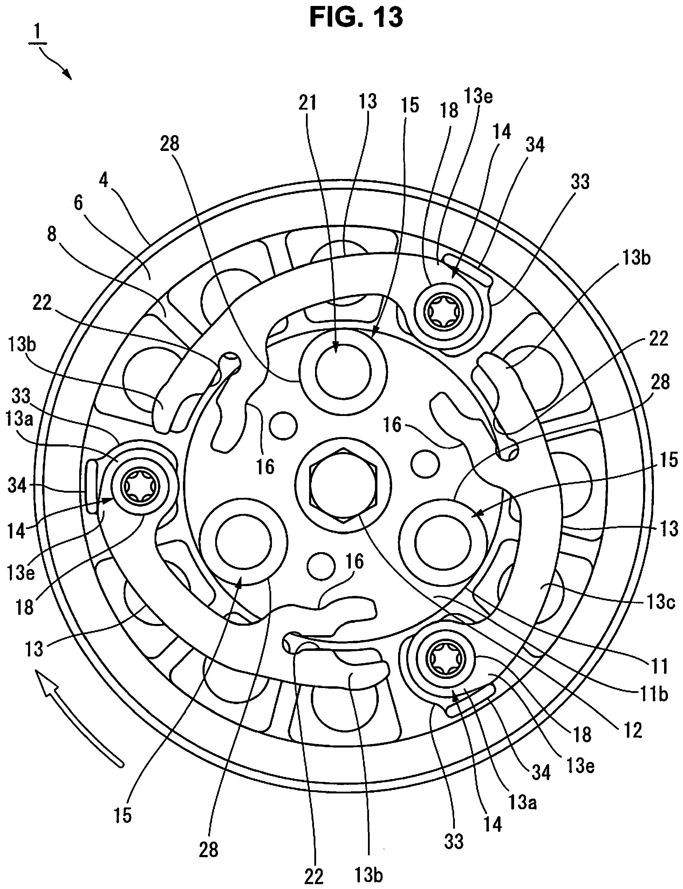

A stopper 34 for regulating the swing of the connecting member 13 is provided and projects on the attaching seat 33. When the connecting member 13 rotates integrally with the pulley 4 and swings by a centrifugal force about an attaching screw 18, the stopper 34 abuts against an outer edge portion 13e of one end portion 13a of the connecting member 13, as shown in Fig. 13.

As shown in Fig. 9, a second connecting structure 15 according to this embodiment is attached on the fore with respect to the hub 11 in the axial direction of the hub 11 and at the same position as that of the fixing bolt 12. A rivet 25 that constitutes part of the second connecting structure 15 is fixed to the hub 11 in a state in which a head portion 28 is positioned on the fore with respect to the hub 11. The other end portion 13b of the connecting member 13 is arranged on the back of the head portion 28 and at a position where the other end portion 13b is adjacent to the head portion 28 of the rivet 25. Even the other end portion 13b according to the second embodiment is formed to be larger than the remaining portion of the connecting member 13 when viewed from the axial direction of the hub 11, as in the case of adopting the first embodiment.

A belleville spring 29 is inserted between the other end portion 13b of the connecting member 13 and the flange portion 11b of the hub 11 in a state in which the belleville spring 29 is elastically deformed. The belleville spring 29 is attached so that the outer peripheral portion contacts the other end portion 13b of the connecting member 13. The head portion 28 of the rivet 25 and the belleville spring 29 have the same size when viewed from the axial direction of the hub 11, and are formed to have a size at which they overlap most part of the other end portion 13b of the connecting member 13. Even in this embodiment, therefore, when the other end portion 13b of the connecting member 13 moves with respect to the head portion 28 and the belleville spring 29, a large frictional resistance is generated to increase the operation load of the torque limiter. Since the operation load of the torque limiter is determined based on the magnitude of the spring force of the belleville spring 29, the accuracy of the operation load of the torque limiter is increased.

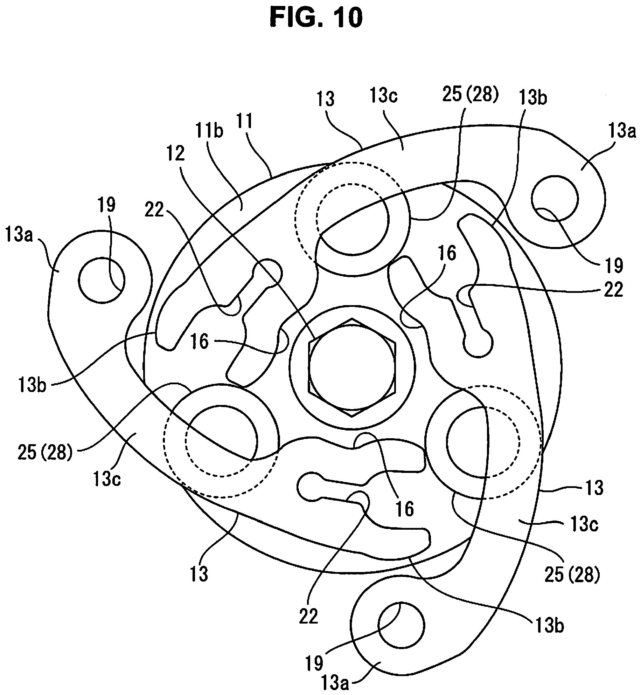

The connecting member 13 according to this embodiment is positioned on the fore with respect to the flange portion 11b of the hub 11. The other end portion 13b of the connecting member 13 faces the fixing bolt 12. As shown in Fig. 10, a recessed portion 16 formed at the other end portion 13b is formed into an arc shape that is recessed toward the outer peripheral portion of the hub 11 when viewed from the axial direction of the hub 11, and a shape in which part of the fixing bolt 12 can be fitted.

When the load of the car air conditioner compressor 2 becomes excessively large and the other end portion 13b of the connecting member 13 is separated from the hub 11, the other end portion 13b of the connecting member 13 swings about a shaft portion 26 of the rivet 25 and comes close to the fixing bolt 12 positioned on the shaft center side, as indicated by a chain double-dashed line in Fig. 8.

However, when the other end portion 13b comes close to the fixing bolt 12, part of the fixing bolt 12 is fitted in the recessed portion 16, as shown in Fig. 10, and the connecting member 13 and the fixing bolt 12 do not interfere with each other. This obviates the need to upsize the power transmission device 1 in the radial direction in order to avoid the interference between these members.

Even this embodiment can provide a power transmission device capable of setting the operation load of a torque limiter with high accuracy, and increasing the operation load of the torque limiter while achieving downsizing.

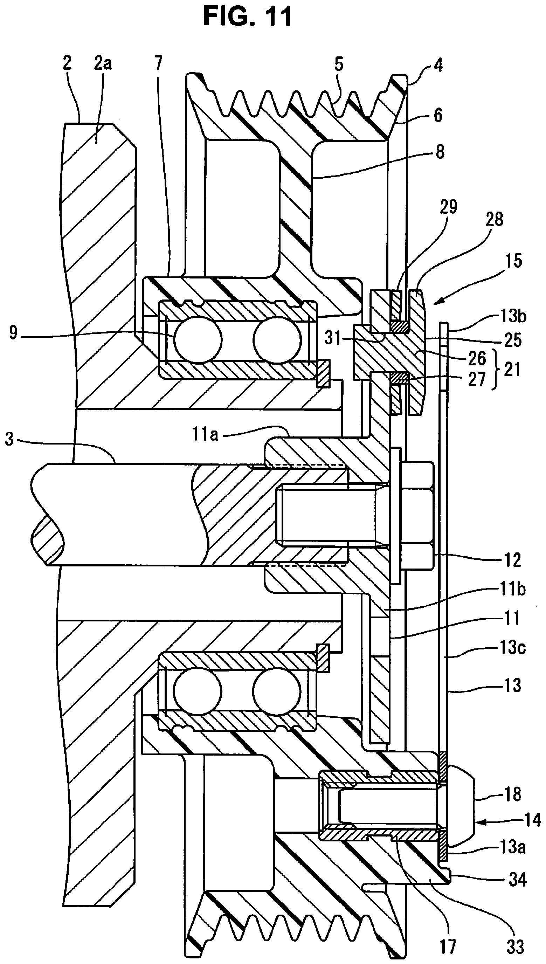

After the other end portion 13b is separated from the hub 11, the connecting member 13 is restored to the initial shape by elasticity and linearly extends in a direction perpendicular to the axial direction of the hub 11, as shown in Fig. 11. At this time, the other end portion 13b of the connecting member 13 moves forward from the fixing bolt 12 and the rivet 25 in the axial direction of the hub 11. The connecting member 13 separated from the hub 11 swings about the attaching screw 18 of one end portion 13a by a centrifugal force generated by rotation integral with the pulley 4. The swing direction is a direction in which the other end portion 13b moves to the outer peripheral side of the pulley 4. This swing is regulated by abutment of the outer edge portion 13e of one end portion 13a of the connecting member 13 to the stopper 34, as shown in Fig. 13. Since the connecting member 13 is not stretched by the centrifugal force, other components in the engine room (not shown) of the motorcar are not damaged.

### (Modification of Slit)

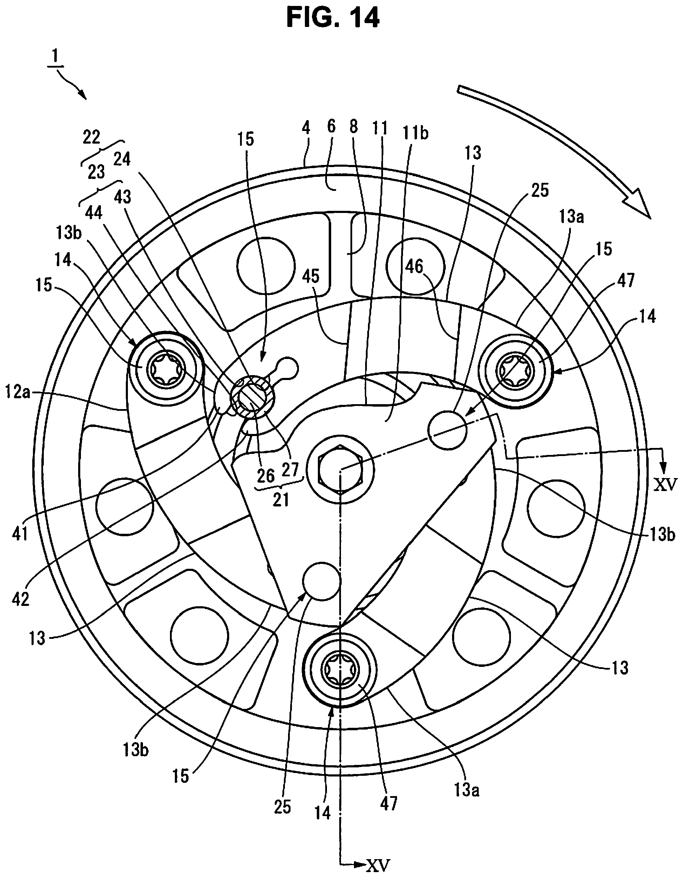

The slit of the power transmission device described in the first embodiment and the slit of the power transmission device described in the second embodiment can be formed as shown in Figs. 14 to 17. In these drawings, the same reference numerals as those in Figs. 1 to 13 denote the same or similar parts, and a detailed description thereof will be properly omitted.

A pair of pawl pieces 41 and 42 that are engaged with the columnar body 21 is provided at the other end portion 13b of each connecting member 13 shown in Fig. 14. The slit 22 of the other end portion 13b is formed between the pawl pieces 41 and 42. The pawl pieces 41 and 42 can be elastically deformed in a direction in which the width of the slit 22 is increased/ decreased. The wide portion 23 of the slit 22 is formed into a shape in which the columnar body 21 is engageably inserted. More specifically, the wide portion 23 has an entrance portion 43 positioned on the distal end side of the slit 22, and a fitting portion 44 in which the collar 27 is fitted. The opening width of the entrance portion 43 is formed to be smaller than the outer diameter of the collar 27.

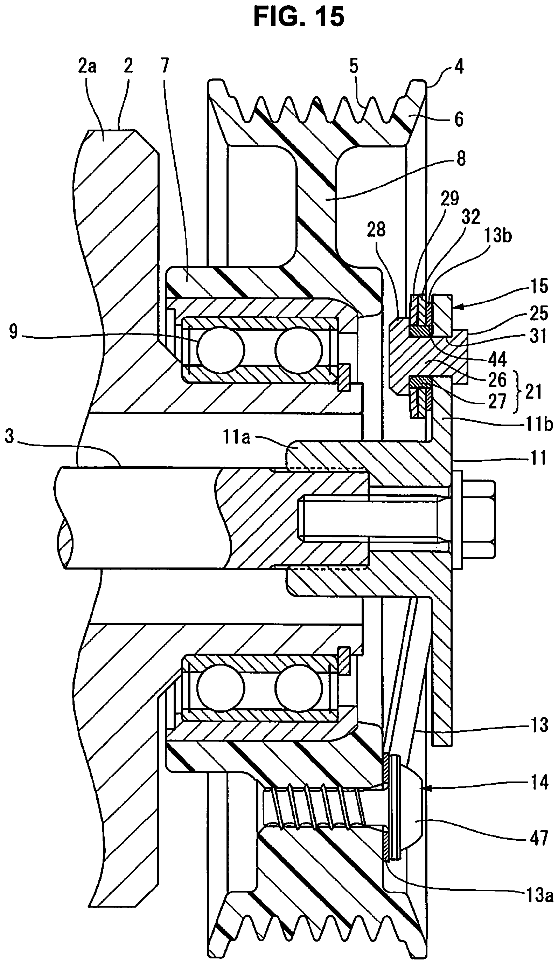

One end portion 13a and the other end portion 13b of the connecting member 13 shown in Fig. 15 are formed parallelly in a state in which they are spaced apart in the axial direction of the hub 11. To implement this, the connecting member 13 is bent at two bending portions 45 and 46 (see Fig. 14).

The first connecting structure 14 that connects one end portion 13a of the connecting member 13 to the pulley 4 is constituted using a tapping screw 47. That is, one end portion 13a of the connecting member 13 is attached to the intermediate portion 8 of the pulley 4 by the tapping screw 47.

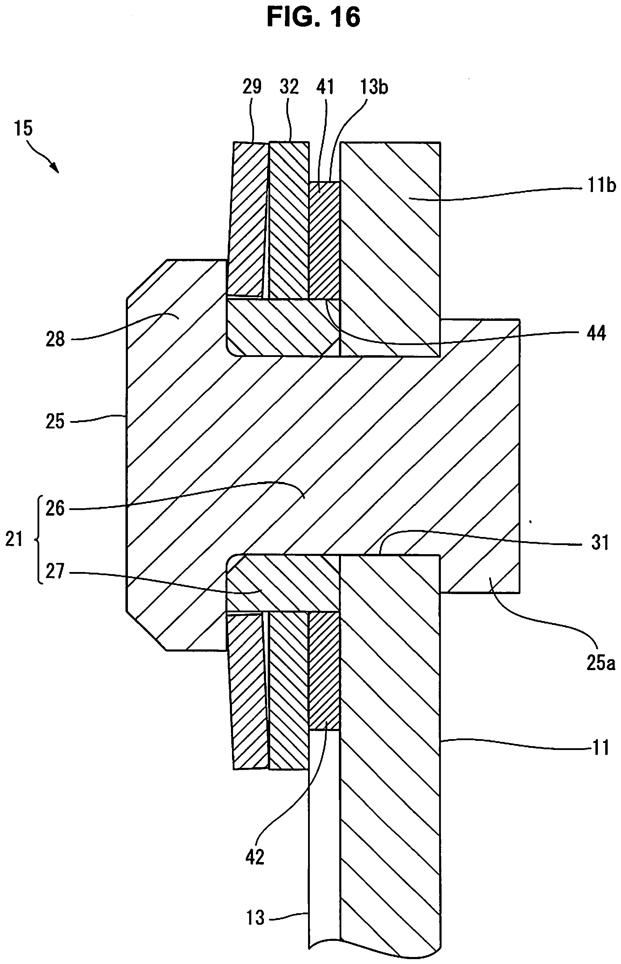

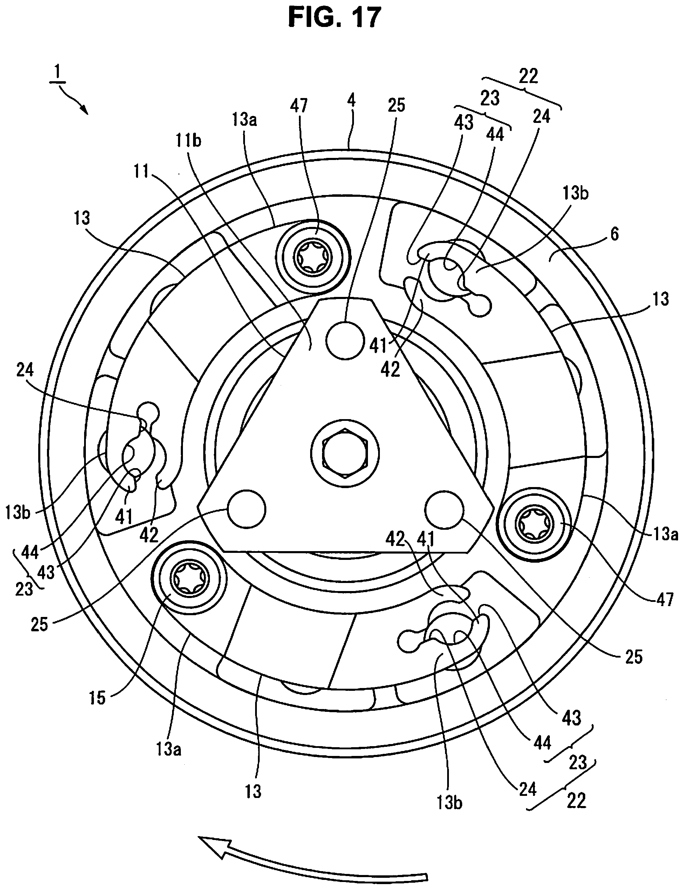

As shown in Fig. 16, the second connecting structure 15 is constituted using the rivet 25, the collar 27, the belleville spring 29, the washer 32, and the like. The belleville spring 29 is positioned on the fore side (right side in Fig. 16) of the head portion 28 of the rivet 25, and the washer 32 is positioned on the fore side of the belleville spring 29. The belleville spring 29 and the washer 32 are formed into an annular shape, and held by the rivet 25 via the collar 27 in a state in which the collar 27 extends through the center portion. The other end portion 13b of the connecting member 13 is sandwiched between the washer 32 and the flange portion 11b of the hub 11. As shown in Fig. 17, the flange portion 11b is formed into a triangular shape when viewed from the axial direction of the rotation shaft 3. Connecting portions each formed from the second connecting structure 15 are provided at the three vertex portions of the flange portion 11b.

In each second connecting structure 15 having this arrangement, the connecting member 13 is connected to the hub 11 so that the following two types of drags can act on the connecting member 13 to transmit power. The two types of drags are a frictional resistance generated at the contact portion between the connecting member 13 and the flange portion 11b of the hub 11, and a drag generated when the slit 22 expands so that the columnar body 21 comes off the engageable insertion portion. The magnitude of the frictional resistance is a magnitude corresponding to the magnitude of the spring force of the belleville spring 29. The magnitude of the drag generated when the slit 22 expands is a magnitude mainly corresponding to the spring force of the connecting member 13 having the slit 22. The magnitude of each of these spring forces is a magnitude that is not greatly influenced by the fastening force of the rivet 25 and is almost equal to a design value.

The operation of the power transmission device 1 according to this modification will be explained.

In the power transmission device 1, when the pulley 4 rotates, the connecting members 13 pull the flange portion 11b of the hub 11 forward in the rotation direction to rotate the hub 11. As a result, the rotation shaft 3 having the hub 11 rotates to drive the compressor 2. This power transmission state is a state in which the two drags acting on the second connecting structure 15 become larger than a tensile force acting on the connecting member 13.

When an overload is generated in the compressor 2 and the above-described tensile force exceeds the two drags, the second connecting structure 15 is disconnected. That is, each connecting member 13 moves forward in the rotation direction with respect to the flange portion 11b against a frictional resistance generated at the contact portion between the connecting member 13 and the flange portion 11b. Along with this, the columnar body 21 engageably inserted in the slit 22 of the connecting member 13 expands the slit 22 and comes off the engageable insertion portion. As a result, when the load of the slit 22 becomes excessively large, the second connecting structure 15 substantially functions as the torque limiter to cut off the transmission of power.

The connecting member 13 that has come off the columnar body 21 rotates integrally with the pulley 4 and moves with respect to the hub 11. At this time, the belleville spring 29 and the washer 32 that are positioned on the fore side in the rotation direction of the pulley 4 come into contact with the inner arc surface of the connecting member 13 having an arc shape when viewed from the axial direction of the rotation shaft 3. By the contact with the belleville spring 29 and the washer 32, the connecting member 13 swings so that an attaching portion 13b on the side of the hub 11 moves to the outer peripheral side of the pulley 4, as shown in Fig. 17. Note that when the tapping screw 47 is screwed in the pulley 4 so as to permit the swing of the connecting member 13, the connecting member 13 swings by a centrifugal force, abuts against the belt latching portion 6 of the pulley 4, and stays at this position. Even if the connecting member 13 is stretched by the centrifugal force, the belt is not damaged.

In the power transmission device 1, the magnitude of the load of the compressor 2 (operation load of the torque limiter) when the transmission of power is cut off is determined based on the frictional resistance and the drag generated when the slit 22 expands. The magnitude of the frictional resistance is a magnitude corresponding to the magnitude of the spring force of the belleville spring 29. The magnitude of the drag generated when the slit 22 expands is a magnitude mainly corresponding to the spring force of the connecting member 13 having the slit 22. Each of the spring force of the belleville spring 29 and the spring force of the connecting member 13 is not greatly influenced by the fastening force of the rivet 25 and is almost equal to a design value.

Hence, this modification can provide a power transmission device capable of setting the load of the compressor 2 with high accuracy when cutting off power transmission, without depending on the fastening force of the rivet 25.

The columnar body 21 according to this modification is constituted by the shaft portion 26 of the rivet 25 that extends through the flange portion 11b of the hub 11 and the connecting member 13, and the circular cylindrical collar 27 that is formed to be longer than the thickness of the connecting member 13 so that the shaft portion 26 extends through the collar 27, and that is engageably inserted in the slit 22.

According to this modification, the collar 27 formed separately from the rivet 25 is engageably inserted in the slit 22. The outer diameter of the collar 27 is constant regardless of calking of the rivet 25. Since the object (collar 27) engageably inserted in the slit 22 is not expanded by calking and the outer diameter of the object is not increased, the drag of the connecting member 13 when the slit 22 expands becomes constant.

This modification can therefore provide a power transmission device capable of setting the load of the compressor 2 with higher accuracy when power transmission is cut off.

### (Third Embodiment)

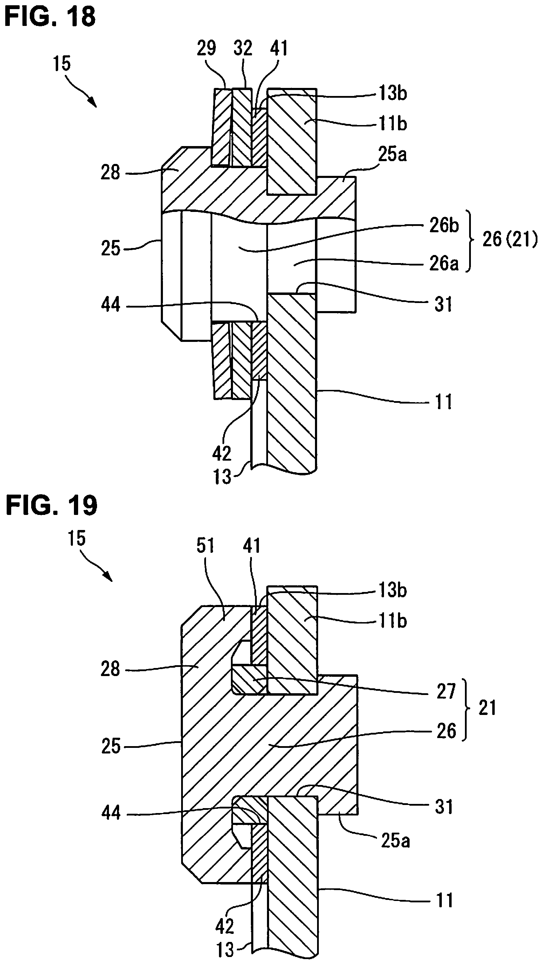

The columnar body of the second connecting structure can be constituted as shown in Fig. 18. A second connecting structure 15 shown in Fig. 18 constitutes the invention defined in claim 7. In Fig. 18, the same reference numerals as those in Figs. 1 to 17 denote the same or similar parts, and a detailed description thereof will be properly omitted.

A columnar body 21 of the second connecting structure 15 shown in Fig. 18 is constituted by a shaft portion 26 of a rivet 25 that extends through a flange portion 11b of a hub 11, a connecting member 13, and the like. The shaft portion 26 is constituted by a small-diameter portion 26a that extends through the flange portion 11b, and a large-diameter portion 26b that is formed to be longer than the thickness of the connecting member 13 and is engageably inserted in a slit 22.

The large-diameter portion 26b extends through the other end portion 13b of the connecting member 13, a belleville spring 29, and a washer 32.

According to this embodiment, the columnar body 21 can be formed from one component (rivet 25), and the number of assembly steps can be reduced in comparison with a case in which the columnar body 21 is constituted by a plurality of members. This embodiment can provide a power transmission device that can be easily manufactured.

### (Fourth Embodiment)

The elastic body of the second connecting structure can be constituted as shown in Fig. 19. A second connecting structure 15 shown in Fig. 19 constitutes the invention defined in claim 9. In Fig. 19, the same reference numerals as those in Figs. 1 to 17 denote the same or similar parts, and a detailed description thereof will be properly omitted.

A columnar body 21 shown in Fig. 19 is constituted by a shaft portion 26 of a rivet 25 that extends through a flange portion 11b of a hub 11 and a connecting member 13, and a collar 27 through which the shaft portion 26 extends.

A cylindrical portion 51 having a circular cylindrical shape is formed integrally with the outer circumferential portion of a head portion 28 of the rivet 25. In this embodiment, the cylindrical portion 51 constitutes an "elastic body" in the invention defined in claim 9. The cylindrical portion 51 is formed into a shape in which the cylindrical portion 51 abuts against the connecting member 13 and is elastically deformed in a state in which the rivet 25 is calked and the head portion 28 sandwiches the collar 27 in cooperation with a flange portion 11b. The connecting member 13 according to this embodiment is pressed against the flange portion 11b by the spring force of the cylindrical portion 51.

According to this embodiment, the cylindrical portion 51 serving as the elastic body is formed integrally with the head portion 28 of the rivet 25, so the number of assembly steps can be reduced in comparison with a case in which the elastic body is formed separately from the rivet 25. This embodiment can therefore provide a power transmission device that can be easily manufactured.

### (Fifth Embodiment)

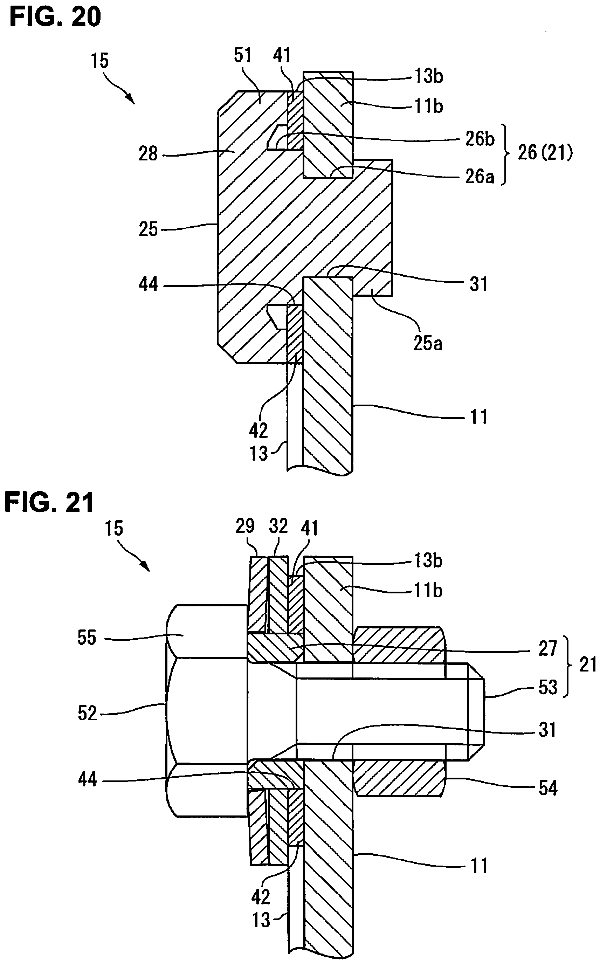

The elastic body of the second connecting structure can be constituted as shown in Fig. 20. A second connecting structure 15 shown in Fig. 20 constitutes the invention defined in claim 10. In Fig. 20, the same reference numerals as those in Figs. 1 to 17 denote the same or similar parts, and a detailed description thereof will be properly omitted.

A columnar body 21 of the second connecting structure 15 shown in Fig. 20 is constituted by a shaft portion 26 of a rivet 25 that extends through a flange portion 11b of a hub 11 and a connecting member 13. The shaft portion 26 is constituted by a small-diameter portion 26a that extends through the flange portion 11b, and a large-diameter portion 26b that is formed to be longer than the thickness of the connecting member 13 and is engageably inserted in a slit 22.

A cylindrical portion 51 having a circular cylindrical shape is formed integrally with the outer circumferential portion of a head portion 28 of the rivet 25. In this embodiment, the cylindrical portion 51 constitutes an "elastic body" in the invention defined in claim 10. The cylindrical portion 51 is formed into a shape in which the cylindrical portion 51 abuts against the connecting member 13 and is elastically deformed in a state in which the rivet 25 is calked and the head portion 28 sandwiches the large-diameter portion 26b in cooperation with the flange portion 11b. The connecting member 13 according to this embodiment is pressed against the flange portion 11b by the spring force of the cylindrical portion 51.

According to this embodiment, the columnar body 21 can be formed from one component (rivet 25), and the elastic body is formed integrally with the rivet 25. Thus, the second connecting structure 15 can be implemented by only two components, that is, the rivet 25 and the connecting member 13.

This embodiment can provide a power transmission device that can be manufactured more easily.

### (Sixth Embodiment)

The columnar portion of the second connecting structure can be constituted as shown in Fig. 21. A second connecting structure 15 shown in Fig. 21 constitutes the invention defined in claim 11. In Fig. 21, the same reference numerals as those in Figs. 1 to 17 denote the same or similar parts, and a detailed description thereof will be properly omitted.

A columnar body 21 of the second connecting structure 15 shown in Fig. 21 is constituted by a shaft portion 53 of a bolt 52 that extends through a flange portion 11b of a hub 11 and a connecting member 13, and a collar 27 through which the shaft portion 53 extends. The length of the collar 27 in the axial direction is formed to be larger than the thickness of the connecting member 13. The bolt 52 is fixed to the flange portion 11b by threadably fixing a nut 54 on the shaft portion 53 extending through the flange portion 11b and the collar 27. In this fixing state, the collar 27 is sandwiched between a head portion 55 of the bolt 52 and the flange portion 11b.

In this embodiment, the head portion 55 of the bolt 52 constitutes a "projecting body" in the invention defined in claim 11. A belleville spring 29 and a washer 32 that constitute an "elastic body" in the invention defined in claim 11 are provided between the head portion 55 and the connecting member 13.

In this embodiment, the columnar body 21 can be constituted using the bolt 52 that is a ready-made product, so the manufacturing cost can be reduced in comparison with the use of a dedicated rivet 25. Hence, this embodiment can provide, at low cost, a power transmission device capable of setting with high accuracy the magnitude of a load at which power transmission is cut off.

(Modification in Which Position of Second Connecting Structure Is Changed)

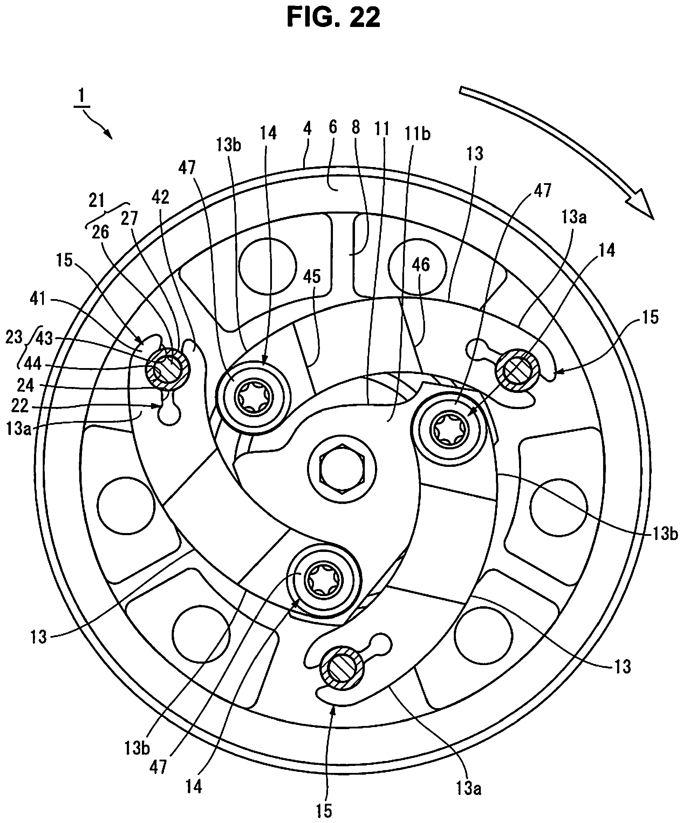

In the above-described embodiments, the second connecting structure 15 constitutes the connecting portion between the other end portion 13b of the connecting member 13 and the hub 11. However, the present invention is not limited to this. As shown in Fig. 22, a second connecting structure 15 according to the present invention can be provided at the connecting portion between a pulley 4 and one end portion 13a of a corresponding connecting member 13. In Fig. 22, the same reference numerals as those in Figs. 1 to 17 denote the same or similar parts, and a detailed description thereof will be properly omitted.

One end portion 13a of the connecting member 13 shown in Fig. 22 is connected to an intermediate portion 8 of the pulley 4 by the second connecting structure 15. A slit 22 is formed in one end portion 13a of the connecting member 13, and a columnar body 21 is provided at the intermediate portion 8 of the pulley 4. The other end portion 13b of the connecting member 13 is connected to a hub 11 by a first connecting structure 14 on the back side with respect to one end portion 13a in the rotation direction of the pulley 4.

In a power transmission device 1 shown in Fig. 22, when an overload is generated in a compressor 2, the columnar body 21 is pulled out from the slit 22 forward in the rotation direction, cutting off the transmission of power. Even when the arrangement shown in Fig. 22 is employed, the same effects as those obtained when each of the above-described embodiments is employed can be obtained. Note that even when the arrangement shown in Fig. 22 is employed, the columnar body 21 and the elastic body can be constituted as shown in Figs. 18 to 21.

### Explanation of the Reference Numerals and Signs

1...power transmission device, 4...pulley 4 (driving-side rotation member), 11...hub (driven-side rotation member), 11a...boss portion, 11b...flange portion, 12...fixing bolt, 13...connecting member, 14...first connecting structure, 15...second connecting structure, 16...recessed portion, 21...columnar body, 22...slit, 25...rivet, 26...shaft portion, 26a...small-diameter portion, 26b...large-diameter portion, 27...collar, 28...head portion (projecting body), 29...belleville spring (elastic body), 34...stopper, 51...cylindrical portion (elastic body), 52...bolt

## Claims

1. A power transmission device comprising:
a first rotation body (4) and a second rotation body (11) that are arranged on the same rotation axis;
a connecting member (13) that connects the first rotation body (4) and the second rotation body (11);
a first connecting structure (14) that connects one end portion (13a) of the connecting member (13) to the first rotation body (4) and regulates detachment of the connecting member (13) from the first rotation body (4); and
a second connecting structure (15) that connects the other end portion (13b) of the connecting member (13) to the second rotation body (11) and permits detachment of the connecting member (13) from the second rotation body (11),
wherein the second connecting structure (15) includes:
a columnar body (21) provided on the second rotation body (11), the columnar body extending along the rotation axis through the other end portion (13b);
a projecting body (28) formed along the other end portion (13b) from an end portion of the columnar body (21) that is closer to the other end portion (13b); and
an elastic body (29) configured to press the other end portion (13b) in a direction of the axis, and generate a frictional force for transmitting power between a rotation member including the columnar body (21) and the second rotation body (11), and the other end portion (13b),
**characterized in that**
the second connecting structure (15) further includes a slit (22) in which the columnar body (21) is inserted formed from an edge of the other end portion (13b) along a rotation locus of the columnar body (21);
the other end portion (13b) of the connecting member (13) is formed to be larger than a remaining portion of the connecting member (13) when viewed from the direction of the axis, and
a recessed portion (16) that is recessed toward an outer peripheral side of the second rotation body (11) is formed at a portion of the other end portion (13b) that is directed to a shaft center side of the second rotation body (11).

2. The power transmission device according to claim 1, wherein
the first rotation body (4) is a driving-side rotation body that is connected to a power source and driven,
the second rotation body (11) is a driven-side rotation body that is positioned on the same axis as an axis of the driving-side rotation body,
the driving-side rotation body (4) is supported at one end portion of a driven-side device so as to freely rotate in a state in which the driving-side rotation body is positioned on the same axis as an axis of a rotation shaft (3) of the driven-side device,
the driven-side rotation body (11) includes a boss portion (11a) that is fixed to one end portion (13a) of the rotation shaft (3), and an attaching flange portion (11b) that extends outward from the boss portion (11a) in a radial direction and is connected to the connecting member (13),
the other end portion (13b) of the connecting member (13) is connected to the driven-side rotation body (11) on a back side in the rotation direction with respect to the one end portion (13a),
the connecting member (13) is formed from a spring material, and is connected to the driving-side rotation body and the driven-side rotation body in a state in which the rotation shaft (3) is biased in a direction from one end portion to the other end portion, and
the recessed portion (16) of the connecting member (13) is formed into a shape in which part of the boss portion (11a) can be fitted.

3. The power transmission device according to claim 1, wherein
the first rotation body (4) is a driving-side rotation body that is connected to a power source and driven,
the second rotation body (11) is a driven-side rotation body that is positioned on the same axis as an axis of the driving-side rotation body,
the driving-side rotation body is supported at one end portion of a driven-side device so as to freely rotate in a state in which the driving-side rotation body is positioned on the same axis as an axis of a rotation shaft (3) of the driven-side device,
the driven-side rotation body includes a boss portion (11a) that is fixed to one end portion (13a) of the rotation shaft (3), and an attaching flange portion (11b) that extends outward from the boss portion (11a) in a radial direction and is connected to the connecting member (13),
the other end portion (13b) of the connecting member (13) is connected to the driven-side rotation body (11) on a back side in the rotation direction with respect to the one end portion (13a),
the connecting member (13) is formed from a spring material, and is connected to the driving-side rotation body and the driven-side rotation body in a state in which the rotation shaft (3) is biased in a direction from the other end portion (13b) to one end portion (13a), and
the recessed portion (16) of the connecting member (13) is formed into a shape in which part of a fixing bolt that overlaps a shaft end of the driven-side rotation body and fixes the driven-side rotation body to the rotation shaft (3) can be fitted.

4. The power transmission device according to claim 3, wherein a stopper (34) against which the connecting member (13) abuts when the connecting member (13) swings about the one end portion (13a) by a centrifugal force is provided at a portion of the driving-side rotation body to which the one end portion (13a) of the connecting member (13) is connected.

5. The power transmission device according to any one of claims 1 to 4, wherein
the columnar body (21) is constituted by a shaft portion (26) of a rivet (25) that extends through the second rotation body (11) and the other end portion (13b), and a circular cylindrical collar (27) which is formed to be longer than a thickness of the other end portion (13b), through which the shaft portion (26) extends, and which is inserted in the slit (22),
the projecting body (28) is constituted by a head portion of the rivet (25), and
the elastic body (29) is constituted by a plate-like spring provided between the projecting body (28) and the second rotation body (11).

6. The power transmission device according to claim 5, wherein
the elastic body (29) is constituted by an annular belleville spring through which the columnar body (21) extends, and is provided between the other end portion (13b) and the second rotation body (11) in a state in which an outer peripheral portion contacts the other end portion (13b), and
the projecting body (28) is formed to have a size at which an entire area of the elastic body (29) overlaps the projecting body when viewed from the direction of the axis.

7. The power transmission device according to any one of claims 1 to 4, wherein
the columnar body (21) is constituted by a shaft portion (26) of a rivet (25) that extends through the second rotation body (11) and the other end portion (13b),
the shaft portion (26) is constituted by a small-diameter portion (26a) that extends through the second rotation body (11), and a large-diameter portion (26b) that is formed to be longer than a thickness of the other end portion (13b) and is inserted in a slit (22),
the projecting body (28) is constituted by a head portion of the rivet (25), and
the elastic body (29) is constituted by a plate-like spring provided between the projecting body (28) and the second rotation body (11).

8. The power transmission device according to claim 7, wherein
the elastic body (29) is constituted by an annular belleville spring through which the columnar body (21) extends, and is provided between the other end portion (13b) and the second rotation body (11) in a state in which an outer peripheral portion contacts the other end portion (13b), and
the projecting body (28) is formed to have a size at which an entire area of the elastic body (29) overlaps the projecting body in the direction of the axis.

9. The power transmission device according to any one of claims 1 to 4, wherein
the columnar body (21) is constituted by a shaft portion (26) of a rivet (25) that extends through the second rotation body (11) and the other end portion (13b), and a circular cylindrical collar (27) which is formed to be longer than a thickness of the other end portion (13b), through which the shaft portion (26) extends, and which is inserted in the slit (22),
the projecting body (28) is constituted by a head portion (55) of the rivet (25), and
the elastic body (29) is constituted by a cylindrical portion (51) formed integrally with an outer circumferential portion of the head portion (55).

10. The power transmission device according to any one of claims 1 to 4, wherein
the columnar body (21) is constituted by a shaft portion (26) of a rivet (25) that extends through the second rotation body (11) and the other end portion (13b),
the shaft portion (26) is constituted by a small-diameter portion (26a) that extends through the second rotation body (11), and a large-diameter portion (26b) that is formed to be longer than a thickness of the other end portion (13b) and is inserted in a slit (22),
the projecting body (28) is constituted by a head portion (55) of the rivet (25), and
the elastic body (29) is constituted by a cylindrical portion (51) formed integrally with an outer circumferential portion of the head portion (55).

11. The power transmission device according to any one of claims 1 to 4, wherein
the columnar body (21) is constituted by a shaft portion (53) of a bolt (52) that extends through the second rotation body (11) and the other end portion (13b), and a circular cylindrical collar (27) which is formed to be longer than a thickness of the other end portion (13b), through which the shaft portion (53) of the bolt (52) extends, and which is inserted in the slit (22),
the projecting body (28) is constituted by a head portion (55) of the bolt (52), and
the elastic body (29) is constituted by a plate-like spring provided between the head portion (55) and the second rotation body (11).

## Patentansprüche

1. Kraftübertragungsvorrichtung, Folgendes umfassend:
einen ersten Rotationskörper (4) und einen zweiten Rotationskörper (11), welche auf der gleichen Drehachse angeordnet sind;
ein Verbindungsglied (13), welches den ersten Rotationskörper (4) und den zweiten Rotationskörper (11) verbindet;
eine erste Verbindungsstruktur (14), welche einen Endabschnitt (13a) des Verbindungsglieds (13) mit dem ersten Rotationskörper (4) verbindet und eine Trennung des Verbindungsglieds (13) von dem ersten Rotationskörper (4) reguliert; und
eine zweite Verbindungsstruktur (15), welche den anderen Endabschnitt (13b) des Verbindungsglieds (13) mit dem zweiten Rotationskörper (11) verbindet und eine Trennung des Verbindungsglieds (13) von dem zweiten Rotationskörper (11) ermöglicht,
wobei die zweite Verbindungsstruktur (15) Folgendes umfasst:
einen säulenförmigen Körper (21), welcher auf dem zweiten Rotationskörper (11) bereitgestellt ist, wobei sich der säulenförmige Körper entlang der Drehachse durch den anderen Endabschnitt (13b) erstreckt;
einen überstehenden Körper (28), welcher entlang des anderen Endabschnitts (13b) aus einem Endabschnitt des säulenförmigen Körpers (21) ausgebildet ist, welcher näher an dem anderen Endabschnitt (13b) ist; und
einen elastischen Körper (29), welcher konfiguriert ist, den anderen Endabschnitt (13b) in eine Richtung der Achse zu drücken, und eine Reibungskraft zum Übertragen von Kraft zwischen einem Rotationsglied, welches den säulenförmigen Körper (21) und den zweiten Rotationskörper (11) umfasst, und dem anderen Endabschnitt (13b) erzeugt,
**dadurch gekennzeichnet, dass**
die zweite Verbindungsstruktur (15) weiterhin einen Schlitz (22) umfasst, in welchen der säulenförmige Körper (21) eingeführt ist und welcher aus einem Rand des anderen Endabschnitts (13b) entlang einer Rotationsortskurve des säulenförmigen Körpers (21) ausgebildet ist;
der andere Endabschnitt (13b) des Verbindungsglieds (13) größer als ein verbleibender Abschnitt des Verbindungsglieds (13) ausgebildet ist, wenn er aus der Richtung der Achse gesehen wird, und
ein vertiefter Abschnitt (16), welcher in Richtung auf eine äußere periphere Seite des zweiten Rotationskörpers (11) vertieft ist, an einem Abschnitt des anderen Endabschnitts (13b) ausgebildet ist, welcher auf eine Wellenmittenseite des zweiten Rotationskörpers (11) gerichtet ist.

2. Kraftübertragungsvorrichtung nach Anspruch 1, wobei der erste Rotationskörper (4) ein antriebsseitiger Rotationskörper ist, welcher mit einer Kraftquelle verbunden ist und davon angetrieben wird,
der zweite Rotationskörper (11) ein abtriebsseitiger Rotationskörper ist, welcher auf der gleichen Achse angeordnet ist wie eine Achse des antriebsseitigen Rotationskörpers,
der antriebsseitige Rotationskörper (4) an einem Endabschnitt einer abtriebsseitigen Vorrichtung gestützt ist, um so in einem Zustand frei zu drehen, in welchem der antriebsseitige Rotationskörper auf der gleichen Achse angeordnet ist wie eine Achse einer Rotationswelle (3) der abtriebsseitigen Vorrichtung,
der abtriebsseitige Rotationskörper (11) einen Muffenabschnitt (11a), welcher an einem Endabschnitt (13a) der Rotationswelle (3) befestigt ist, und einen Befestigungsflanschabschnitt (11b) umfasst, welcher sich von dem Muffenabschnitt (11a) in eine radiale Richtung nach außen erstreckt und mit dem Verbindungsglied (13) verbunden ist,
der andere Endabschnitt (13b) des Verbindungsglieds (13) mit dem abtriebsseitigen Rotationskörper (11) auf einer Rückseite in der Rotationsrichtung hinsichtlich des einen Endabschnitts (13a) verbunden ist,
das Verbindungsglied (13) aus einem Federmaterial ausgebildet ist und mit dem antriebsseitigen Rotationskörper und dem abtriebsseitigen Rotationskörper in einem Zustand verbunden ist, in welchem die Rotationswelle (3) in einer Richtung von einem Endabschnitt zu dem anderen Endabschnitt vorgespannt ist, und
der vertiefte Abschnitt (16) des Verbindungsglieds (13) in einer Gestalt ausgebildet ist, in welche ein Teil des Muffenabschnitts (11a) eingepasst werden kann.

3. Kraftübertragungsvorrichtung nach Anspruch 1, wobei der erste Rotationskörper (4) ein antriebsseitiger Rotationskörper ist, welcher mit einer Kraftquelle verbunden ist und davon angetrieben wird,
der zweite Rotationskörper (11) ein abtriebsseitiger Rotationskörper ist, welcher auf der gleichen Achse angeordnet ist wie eine Achse des antriebsseitigen Rotationskörpers,
der antriebsseitige Rotationskörper an einem Endabschnitt einer abtriebsseitigen Vorrichtung gestützt ist, um so in einem Zustand frei zu drehen, in welchem der antriebsseitige Rotationskörper auf der gleichen Achse angeordnet ist wie eine Achse einer Rotationswelle (3) der abtriebsseitigen Vorrichtung,
der abtriebsseitige Rotationskörper einen Muffenabschnitt (11a), welcher an einem Endabschnitt (13a) der Rotationswelle (3) befestigt ist, und einen Befestigungsflanschabschnitt (11b) umfasst, welcher sich von dem Muffenabschnitt (11a) in eine radiale Richtung nach außen erstreckt und mit dem Verbindungsglied (13) verbunden ist,
der andere Endabschnitt (13b) des Verbindungsglieds (13) mit dem abtriebsseitigen Rotationskörper (11) auf einer Rückseite in der Rotationsrichtung hinsichtlich des einen Endabschnitts (13a) verbunden ist,
das Verbindungsglied (13) aus einem Federmaterial ausgebildet ist und mit dem antriebsseitigen Rotationskörper und dem abtriebsseitigen Rotationskörper in einem Zustand verbunden ist, in welchem die Rotationswelle (3) in eine Richtung von dem anderen Endabschnitt (13b) zu einem Endabschnitt (13a) vorgespannt ist, und
der vertiefte Abschnitt (16) des Verbindungsglieds (13) in einer Gestalt ausgebildet ist, in welche ein Teil eines Befestigungsbolzens, welcher ein Wellenende des abtriebsseitigen Rotationskörpers überlappt und den abtriebsseitigen Rotationskörper an der Rotationswelle (3) befestigt, eingepasst werden kann.

4. Kraftübertragungsvorrichtung nach Anspruch 3, wobei ein Stopper (34), an welchen das Verbindungsglied (13) anstößt, wenn das Verbindungsglied (13) durch eine Zentrifugalkraft um den einen Endabschnitt (13a) herumschwingt, an einem Abschnitt des antriebsseitigen Rotationskörpers bereitgestellt ist, mit welchem der eine Endabschnitt (13a) des Verbindungsglieds (13) verbunden ist.

5. Kraftübertragungsvorrichtung nach einem der Ansprüche 1 bis 4, wobei
der säulenförmige Körper (21) aus einem Schaftabschnitt (26) einer Niete (25), welche sich durch den zweiten Rotationskörper (11) und den anderen Endabschnitt (13b) erstreckt, und aus einem kreisförmigen zylindrischen Kragen (27) besteht, welcher länger ausgebildet ist als eine Dicke des anderen Endabschnitts (13b), durch welchen sich der Schaftabschnitt (26) erstreckt und welcher in den Schlitz (22) eingeführt ist,
der überstehende Körper (28) aus einem Kopfabschnitt der Niete (25) besteht, und
der elastische Körper (29) aus einer plattenförmigen Feder besteht, welche zwischen dem überstehenden Körper (28) und dem zweiten Rotationskörper (11) bereitgestellt ist.

6. Kraftübertragungsvorrichtung nach Anspruch 5, wobei
der elastische Körper (29) aus einer ringförmigen Tellerfeder besteht, durch welche sich der säulenförmige Körper (21) erstreckt und welche zwischen dem anderen Endabschnitt (13b) und dem zweiten Rotationskörper (11) in einem Zustand bereitgestellt ist, in welchem ein äußerer peripherer Abschnitt den anderen Endabschnitt (13b) kontaktiert, und
der überstehende Körper (28) so ausgebildet ist, dass er eine Größe aufweist, bei welcher eine gesamte Fläche des elastischen Körpers (29) den überstehenden Körper überlappt, wenn er aus der Richtung der Achse gesehen wird.

7. Kraftübertragungsvorrichtung nach einem der Ansprüche 1 bis 4, wobei
der säulenförmige Körper (21) aus einem Schaftabschnitt (26) einer Niete (25) besteht, welche sich durch den zweiten Rotationskörper (11) und den anderen Endabschnitt (13b) erstreckt,
der Schaftabschnitt (26) aus einem Abschnitt (26a) mit kleinem Durchmesser, welcher sich durch den zweiten Rotationskörper (11) erstreckt, und aus einem Abschnitt (26b) mit großem Durchmesser besteht, welcher länger als eine Dicke des anderen Endabschnitts (13b) ausgebildet ist und in einen Schlitz (22) eingeführt ist,
der überstehende Körper (28) aus einem Kopfabschnitt der Niete (25) besteht, und
der elastische Körper (29) aus einer plattenförmigen Feder besteht, welche zwischen dem überstehenden Körper (28) und dem zweiten Rotationskörper (11) bereitgestellt ist.

8. Kraftübertragungsvorrichtung nach Anspruch 7, wobei
der elastische Körper (29) aus einer ringförmigen Tellerfeder besteht, durch welche sich der säulenförmige Körper (21) erstreckt und welche zwischen dem anderen Endabschnitt (13b) und dem zweiten Rotationskörper (11) in einem Zustand bereitgestellt ist, in welchem ein äußerer peripherer Abschnitt den anderen Endabschnitt (13b) kontaktiert, und
der überstehende Körper (28) so ausgebildet ist, dass er eine Größe aufweist, bei welcher eine gesamte Fläche des elastischen Körpers (29) den überstehenden Körper in der Richtung der Achse überlappt.

9. Kraftübertragungsvorrichtung nach einem der Ansprüche 1 bis 4, wobei
der säulenförmige Körper (21) aus einem Schaftabschnitt (26) einer Niete (25), welche sich durch den zweiten Rotationskörper (11) und den anderen Endabschnitt (13b) erstreckt, und aus einem kreisförmigen zylindrischen Kragen (27) besteht, welcher länger ausgebildet ist als eine Dicke des anderen Endabschnitts (13b), durch welchen sich der Schaftabschnitt (26) erstreckt und welcher in den Schlitz (22) eingeführt ist,
der überstehende Körper (28) aus einem Kopfabschnitt (55) der Niete (25) besteht, und
der elastische Körper (29) aus einem zylindrischen Abschnitt (51) besteht, welcher integral mit einem äußeren peripheren Abschnitt des Kopfabschnitts (55) ausgebildet ist.

10. Kraftübertragungsvorrichtung nach einem der Ansprüche 1 bis 4, wobei
der säulenförmige Körper (21) aus einem Schaftabschnitt (26) einer Niete (25) besteht, welche sich durch den zweiten Rotationskörper (11) und den anderen Endabschnitt (13b) erstreckt,
der Schaftabschnitt (26) aus einem Abschnitt (26a) mit kleinem Durchmesser, welcher sich durch den zweiten Rotationskörper (11) erstreckt, und aus einem Abschnitt (26b) mit großem Durchmesser besteht, welcher länger als eine Dicke des anderen Endabschnitts (13b) ausgebildet ist und in einen Schlitz (22) eingeführt ist,
der überstehende Körper (28) aus einem Kopfabschnitt (55) der Niete (25) besteht, und
der elastische Körper (29) aus einem zylindrischen Abschnitt (51) besteht, welcher integral mit einem äußeren peripheren Abschnitt des Kopfabschnitts (55) ausgebildet ist.

11. Kraftübertragungsvorrichtung nach einem der Ansprüche 1 bis 4, wobei
der säulenförmige Körper (21) aus einem Schaftabschnitt (53) eines Bolzens (52), welcher sich durch den zweiten Rotationskörper (11) und den anderen Endabschnitt (13b) erstreckt, und aus einem kreisförmigen zylindrischen Kragen (27) besteht, welcher länger ausgebildet ist als eine Dicke des anderen Endabschnitts (13b), durch welchen sich der Schaftabschnitt (53) des Bolzens (52) erstreckt und welcher in den Schlitz (22) eingeführt ist,
der überstehende Körper (28) aus einem Kopfabschnitt (55) des Bolzens (52) besteht, und
der elastische Körper (29) aus einer plattenförmigen Feder besteht, welche zwischen dem Kopfabschnitt (55) und dem zweiten Rotationskörper (11) bereitgestellt ist.

## Revendications

1. Dispositif de transmission de puissance comprenant :
un premier corps rotatif (4) et un second corps rotatif (11) qui sont disposés sur le même axe de rotation ;
un élément de connexion (13) qui relie le premier corps rotatif (4) et le second corps rotatif (11) ;
une première structure de connexion (14) qui relie une partie d'extrémité (13a) de l'élément de connexion (13) au premier corps rotatif (4) et régule le détachement de l'élément de connexion (13) du premier corps rotatif (4) ; et
une seconde structure de connexion (15) qui relie l'autre partie d'extrémité (13b) de l'élément de connexion (13) au second corps rotatif (11) et permet le détachement de l'élément de connexion (13) du second corps rotatif (11),
dans lequel la seconde structure de connexion (15) comprend :
un corps en colonne (21) disposé sur le second corps rotatif (11), le corps en colonne s'étendant le long de l'axe de rotation à travers l'autre partie d'extrémité (13b) ;
un corps en saillie (28) formé le long de l'autre partie d'extrémité (13b) à partir d'une partie d'extrémité du corps en colonne (21) qui est plus proche de l'autre partie d'extrémité (13b) ; et
un corps élastique (29) configuré pour presser l'autre partie d'extrémité (13b) dans une direction de l'axe, et générer une force de friction pour transmettre une puissance entre un élément rotatif comprenant le corps en colonne (21) et le second corps rotatif (11), et l'autre partie d'extrémité (13b),
**caractérisée en ce que**
la seconde structure de connexion (15) comprend en outre une fente (22) dans laquelle le corps en colonne (21) est inséré et qui est formée à partir d'un bord de l'autre partie d'extrémité (13b) le long d'un lieu de rotation du corps en colonne (21) ;
l'autre partie d'extrémité (13b) de l'élément de connexion (13) est formée pour être plus grande que la partie restante de l'élément de connexion (13) lorsque vu de la direction de l'axe, et
une partie évidée (16) qui est en retrait vers un côté périphérique extérieur du second corps rotatif (11) est formée à une partie de l'autre partie d'extrémité (13b) qui est dirigée vers un côté du centre de l'arbre du second corps rotatif (11).

2. Dispositif de transmission de puissance selon la revendication 1, dans lequel
le premier corps rotatif (4) est un corps rotatif du côté entraînement qui est relié à une source d'alimentation et entraîné,
le second corps rotatif (11) est un corps rotatif du côté entraînement qui est positionné sur le même axe que l'axe du corps rotatif du côté entraînement,
le corps rotatif du côté entraînement (4) est supporté à une partie d'extrémité d'un dispositif du côté entraînement de manière à tourner librement dans un état dans lequel le corps rotatif du côté entraînement est positionné sur le même axe que l'axe de l'arbre de rotation (3) du dispositif du côté entraînement,
le corps rotatif du côté entraînement (11) comprend un bossage (11a) qui est fixée à une extrémité (13a) de l'arbre de rotation (3), et une bride de fixation (11b) qui s'étend vers l'extérieur du bossage (11a) dans une direction radiale et est connectée à l'élément de connexion (13),
l'autre extrémité (13b) de l'élément de connexion (13) est reliée au corps rotatif (11) du côté entraînement sur le côté arrière, dans la direction de rotation par rapport à la partie d'extrémité (13a),
l'élément de connexion (13) est formé à partir d'un matériau de ressort, et est relié au corps rotatif du côté entraînement et le corps rotatif du côté entraînement est dans un état dans lequel l'arbre de rotation (3) est incliné dans une direction d'une partie d'extrémité à l'autre partie d'extrémité, et
la partie évidée (16) de l'élément de connexion (13) est façonnée en une forme dans laquelle le bossage (11a) peut être insérée.

3. Dispositif de transmission de puissance selon la revendication 1, dans lequel
le premier corps rotatif (4) est un corps rotatif du côté entraînement qui est relié à une source d'alimentation et entraîné,
le second corps rotatif (11) est un corps rotatif du côté entraînement qui est positionné sur le même axe que l'axe du corps rotatif du côté entraînement,
le corps rotatif du côté entraînement est supporté à une partie d'extrémité d'un dispositif du côté entraînement de manière à tourner librement dans un état dans lequel le corps rotatif du côté entraînement est positionné sur le même axe que l'axe de l'arbre de rotation (3) du dispositif du côté entraînement,
le corps rotatif du côté entraînement comprend un bossage (11a) qui est fixée à une extrémité (13a) de l'arbre de rotation (3), et une bride de fixation (11b) s'étendant vers l'extérieur du bossage (11a) dans une direction radiale et est relié à l'élément de connexion (13),
l'autre partie d'extrémité (13b) de l'élément de connexion (13) est reliée au corps rotatif (11) du côté entraînement sur un côté arrière dans la direction de rotation par rapport à une partie d'extrémité (13a),
l'élément de connexion (13) est formé d'un matériau de ressort et est relié au corps rotatif du côté entraînement et le corps rotatif du côté entraînement est dans un état dans lequel l'arbre de rotation (3) est incliné dans une direction de l'autre partie d'extrémité (13b) à une partie d'extrémité (13a), et
la partie évidée (16) de l'élément de connexion (13) est façonnée en une forme dans laquelle une partie d'un boulon de fixation qui chevauche une extrémité de l'arbre du corps rotatif du côté entraînement et fixe le corps rotatif du côté entraînement à l'arbre de rotation (3) peut être inséré.

4. Dispositif de transmission de puissance selon la revendication 3, dans lequel une butée (34) contre laquelle l'élément de connexion (13) est en contact lorsque l'élément de connexion (13) pivote autour de l'extrémité (13a) par une force centrifuge, au niveau d'une portion du corps rotatif du côté entraînement à laquelle est reliée l'extrémité (13a) de l'élément de connexion (13).

5. Dispositif de transmission de puissance selon l'une quelconque des revendications 1 à 4, dans lequel
le corps en colonne (21) est constitué par un arbre (26) d'un rivet (25) qui s'étend à travers le second corps rotatif (11) et l'autre partie d'extrémité (13b), et une bague cylindrique circulaire (27) qui est formée pour être plus longue que l'épaisseur de l'autre partie d'extrémité (13b), à travers laquelle s'étend l'arbre (26), et qui est inséré dans la fente (22),
le corps en saillie (28) est constitué par une tête du rivet (25), et
le corps élastique (29) est constitué par un ressort-plat disposé entre le corps en saillie (28) et le second corps rotatif (11) .

6. Dispositif de transmission de puissance selon la revendication 5, dans lequel
le corps élastique (29) est constitué un ressort belleville annulaire à travers lequel le corps colonnaire (21) s'étend, et est disposé entre l'autre extrémité (13b) et le second corps rotatif (11) dans l'état dans lequel une partie périphérique extérieur est en contact avec l'autre partie d'extrémité (13b), et
le corps en saillie (28) est conçu pour avoir une taille à laquelle toute une zone du corps élastique (29) chevauche le corps en saillie lorsque vu de la direction de l'axe.

7. Dispositif de transmission de puissance selon l'une quelconque des revendications 1 à 4, dans lequel
le corps en colonne (21) est constitué par un arbre (26) d'un rivet (25) qui s'étend à travers le second corps rotatif (11) et l'autre partie d'extrémité (13b),
l'arbre (26) est constitué d'une partie de petit diamètre (26a) qui s'étend à travers le second corps rotatif (11), et d'une partie de grand diamètre (26b) qui est formée pour être plus longue que l'épaisseur de l'autre extrémité (13b) et est insérée dans une fente (22),
le corps en saillie (28) est constitué par une tête du rivet (25), et
le corps élastique (29) est constitué par un ressort-plat disposé entre le corps en saillie (28) et le second corps rotatif (11) .

8. Dispositif de transmission de puissance selon la revendication 7, dans lequel
le corps élastique (29) est constitué d'un ressort belleville annulaire à travers lequel le corps en colonne (21) s'étend, et est disposé entre l'autre extrémité (13b) et le second corps rotatif (11) dans l'état dans lequel une partie périphérique extérieur vient en contact avec l'autre extrémité (13b), et
le corps en saillie (28) est formé pour avoir une taille à laquelle toute une zone du corps élastique (29) chevauche le corps en saillie dans la direction de l'axe.

9. Dispositif de transmission de puissance selon l'une quelconque des revendications 1 à 4, dans lequel
le corps en colonne (21) est constitué par une partie de l'arbre (26) d'un rivet (25) qui s'étend à travers le second corps rotatif (11) et l'autre extrémité (13b), et un collier cylindrique circulaire (27) est formé pour être plus long que l'épaisseur de l'autre extrémité (13b), à travers laquelle l'arbre (26) s'étend et est insérée dans la fente (22),
le corps en saillie (28) est constitué par une partie tête (55) du rivet (25), et le corps élastique (29) est constitué par une partie cylindrique (51) formée intégralement avec une partie de la circonférence extérieure de la partie tête (55).

10. Dispositif de transmission de puissance selon l'une quelconque des revendications 1 à 4, dans lequel
le corps en colonne (21) est constitué par un arbre (26) d'un rivet (25) qui s'étend à travers le second corps rotatif (11) et l'autre partie d'extrémité (13b),
la partie de l'arbre (26) est constituée par une partie de petit diamètre (26a) qui s'étend à travers le second corps rotatif (11), et une partie de grand diamètre (26b) formée pour être plus longue que l'épaisseur de l'autre extrémité (13b), et est insérée dans une fente (22),
le corps en saillie (28) est constitué par une partie de tête (55) du rivet (25), et
le corps élastique (29) est constitué par une partie cylindrique (51) formée intégralement avec une partie de la circonférence extérieure de la partie tête (55).

11. Dispositif de transmission de puissance selon l'une quelconque des revendications 1 à 4, dans lequel
le corps en colonne (21) est constitué par un arbre (53) d'un boulon (52) qui traverse le second corps rotatif (11) et l'autre partie d'extrémité (13b), et un collier cylindrique circulaire (27) qui est formé pour être plus long que l'épaisseur de l'autre extrémité (13b), à travers laquelle s'étend l'arbre (53) du boulon (52), et qui est insérée dans la fente (22),
le corps en saillie (28) est constitué par une partie tête (55) du boulon (52), et le corps élastique (29) est constitué par un ressort en forme de plaque disposé entre la partie tête (55) et le second corps rotatif (11).
